# EUROPEAN PATENT SPECIFICATION

(11) **EP 4 581 928 B1**
(45) Date of publication and mention of the grant of the patent: **08.04.2026**
(21) Application number: 24150471.1
(22) Date of filing: 05.01.2024
(51) Int. Cl.: A01K 11/00, A01K 29/00, G06V 20/52

(54) **SYSTEM AND METHOD FOR TRACKING MOVEMENTS OF INDIVIDUAL BIRDS**
SYSTEM UND VERFAHREN ZUR VERFOLGUNG DER BEWEGUNGEN EINZELNER VÖGEL
SYSTÈME ET PROCÉDÉ DE SUIVI DES MOUVEMENTS D'OISEAUX INDIVIDUELS

(43) Date of publication of application: 09.07.2025
(73) Proprietor: Bird Buddy Inc., New Castle, DE 19709 (US)
(72) Inventor: OGRIN, Jan, 1230 Dom ale (SI); ZIDAR, Franci, 1000 Ljubljana (SI)
(74) Representative: Hoffmann Eitle

(56) References cited:
- AU-A1- 2018 310 754
- CN-A- 116 740 646

## Description

### [Field]

Example aspects herein generally relate to techniques for tracking movements of individual birds across a region.

### [Background]

Wild birds are normally uniquely identified by attaching a small, individually numbered metal or plastic tag to their leg or wing - a process known as bird ringing or bird banding. The ringing of birds and their subsequent recapture or recovery at different locations can provide information on various aspects often studied by ornithologists, such as the migration patterns of migratory birds, and the territorial behaviour of many species, for example.

Before a bird can be ringed, it needs to be captured by the ringer, typically by being taken as a young bird at the nest or captured as an adult in a fine mist net, baited trap, drag net, cannon net or the like. Once caught, the bird must be handled while the tag is being attached to its leg or wing. Although the tag is usually very light and designed to have no adverse effect on the bird, the capture of the bird in the net or trap, and its subsequent handling during the ringing and any later recapture(s), can be stressful for the bird and, if not done by an adequately trained ringer/finder, can result in injury. In one approach to partially address these problems, field-readable rings are used, which are usually brightly coloured and provided with conspicuous markings in the form of letters and/or numbers that enable individual bird identification without recapture. However, such rings remain prone to fading or becoming detached from the bird, which would make reliable identification of the bird difficult or impossible. An alternative approach is to attach a tiny radio transmitter to the bird (in the form of a 'backpack' for small species, or a device attached to a leg or tail feather for larger species, for example), which enables the bird to be identified and located remotely by triangulation, without visual confirmation of the bird being required. However, in all these approaches, the problems associated with the initial ringing still remain. There is therefore a need for a non-invasive technique for identifying individual birds and tracking their movements over a geographical area that at least partially overcomes these drawbacks of the conventional approaches.

Further background is provided in CN 116740646 A, specifically a group identification method and system for monitoring a migrant bird habitat. The method comprises the following steps: segmenting a migrant bird monitoring image into a preset number of small images; inputting the small image into a trained migrant bird target recognition model, and marking each target area in the small image for the first time according to a target recognition result; judging whether a repeated target area exists in the overlapping area or not according to the contour coordinates of the overlapping area; if the repeated target areas exist in the overlapping area, deleting one of the repeated target areas contained in any two adjacent small images; inputting a to-be-recognized image into the trained migrant bird fine-grained recognition model to obtain a type corresponding to each migrant bird target included in each target region; and performing secondary marking on each migrant bird target included in each target area, and summarizing secondary marking results in all the to-be-identified images. The type of each migrant bird target contained in each target area can thus be accurately identified, and the total number of each migrant bird type in the target habitat can be accurately calculated.

### [Summary]

There is provided, in accordance with a first example aspect herein, a system for identifying and tracking an individual bird, comprising a plurality of bird stations, wherein each bird station provides at least one of food, drink, bathing, nesting and shelter for birds, and comprises a respective imaging device arranged to generate respective image data by capturing a respective image which shows at least part of a foot of a bird visiting the bird station. The system further comprises a data processing apparatus comprising at least one processor, and at least one memory storing computer-executable instructions that, when executed by the at least one processor, cause the at least one processor to generate bird tracking data for tracking a movement of an individual bird between at least some of the bird stations, by: processing the respective image data from each bird station of the plurality of bird stations using reference data which comprises, for each bird of a plurality of different birds, a respective set of feature descriptors derived from at least one image of a foot of the bird, and respective bird identification information which identifies the bird, to determine whether the bird visiting the bird station can be identified as being one of the plurality of different birds; and performing, for each bird station of the plurality of bird stations, processes of: in case it is determined that the bird visiting the bird station can be identified as being one of the plurality of different birds, generating a respective item of the tracking data, which item comprises (i) respective identification information which identifies the one of the plurality of different birds, (ii) respective location information indicative of a geographical location of the bird station, and (iii) a respective indication of a time at which the bird visited the bird station; and in case it is determined that the bird visiting the bird station cannot be identified as being one of the plurality of different birds, generating an indicator indicating that the bird cannot be identified as being one of the plurality of different birds.

In an example embodiment, the computer-executable instructions, when executed by the at least one processor, may cause the at least one processor to process the respective image data from each bird station of the plurality of bird stations to determine whether the bird visiting the bird station can be identified as being one of the plurality of different birds by: processing the image data to generate a set of feature descriptors of the respective image; calculating a respective degree of similarity between the generated set of feature descriptors and each of one or more of the sets of feature descriptors in the reference data; and determining, based on the calculated degrees of similarity, whether the bird visiting the bird station can be identified as being one of the plurality of different birds.

In the example embodiment, the computer-executable instructions, when executed by the at least one processor, may, in accordance with an example embodiment, cause the at least one processor to process the respective image data from each bird station of the plurality of bird stations to generate the respective set of feature descriptors by segmenting the respective image to isolate a part of the image representing an image of the at least part of the foot of the bird at the bird station from a remainder of the image, and processing the isolated part of the image to generate the respective set of feature descriptors of the image.

In the first example aspect or any of its example embodiments set out above, the computer-executable instructions, when executed by the at least one processor, may, in accordance with an example embodiment, further cause the at least one processor to: in case it is determined that the bird visiting first a bird station of the plurality of bird stations can be identified as being one of the plurality of different birds, update the set of feature descriptors in the reference data for the one of the plurality of different birds using at least one new feature descriptor which is derived from the image captured by the imaging device of the first bird station; and in case it is determined that the bird visiting a first bird station of the plurality of bird stations cannot be identified as being one of the plurality of different birds, update the reference data to include at least one new feature descriptor which is derived from image captured by the imaging device of the first bird station, and associated new bird identification information which indicates a newly assigned identity of the bird visiting the first bird station. Alternatively, the imaging device of a first bird station of the plurality of bird stations may be arranged to generate the image data by capturing a first set of images of at least part of the foot of the bird visiting the first bird station, which first set of images includes the image captured by the imaging device of the first bird station, the first bird station may further comprise a second imaging device arranged to capture a second set of images, each image of the second set of images showing a feathered portion of a bird at the first bird station, the second imaging device being arranged to capture the second set of images while the imaging device of the first bird station is capturing the first set of images, and the computer-executable instructions, when executed by the at least one processor, may further cause the at least one processor to: determine, by analysing the second set of images, whether the same bird was imaged in the images of the second set of images; in case it is determined that the same bird was imaged in the images of the second set of images, and that the bird visiting the first bird station can be identified as being one of the plurality of different birds, update the reference data for the one of the plurality of different birds using at least one new feature descriptor which is derived from at least one image in the first set of images; in case it is determined that the same bird was imaged in the images of the second set of images, and that the bird visiting the first bird station cannot be identified as being one of the plurality of different birds, update the reference data to include at least one new feature descriptor which is derived from at least one image in the first set of images, and new bird identification information which indicates a newly assigned identity of the bird visiting the first bird station; and in case it is determined that the same bird was not imaged in the images of the second set of images, generate an indicator which indicates that the reference data is not to be updated using at least one image in the first set of images.

In the first example aspect or any of its example embodiments set out above, the reference data may, in accordance with an example embodiment, further comprise, for each bird of the plurality of different birds, a respective indication of one or more attributes relating to the bird, a first bird station of the plurality of bird stations may further comprise a second imaging device arranged to capture a second image of the bird at the first bird station, wherein the second image comprises an image portion which shows a feathered portion of the bird at the first bird station, and the computer-executable instructions, when executed by the at least one processor, may further cause the at least one processor to: process the image portion to obtain an indication of at least one attribute of the one or more attributes which relates to the bird at the first bird station; and identify a subset of the reference data using the obtained indication. Furthermore, the processing of the image data from the first bird station to determine whether the bird at the first bird station can be identified as being one of the plurality of different birds may use feature descriptors that are limited to the feature descriptors in the identified subset of the reference data. Alternatively, the reference data may, in accordance with an example embodiment, further comprise, for each bird of the plurality of different birds, a respective indication of one or more attributes relating to the bird, and the image captured by the imaging device of a first bird station of the plurality of bird stations may comprise an image portion which shows a feathered portion of the bird at the first bird station. In this alternative, the computer-executable instructions, when executed by the at least one processor, may further cause the at least one processor to: process the image portion to obtain an indication of at least one attribute of the one or more attributes which relates to the bird at the first bird station; and identify a subset of the reference data using the obtained indication. Furthermore, in the alternative, the processing of the image data from the first bird station to determine whether the bird at the first bird station can be identified as being one of the plurality of different birds may use feature descriptors that are limited to the feature descriptors in the identified subset of the reference data.

The one or more attributes may comprise one or more of a species of the bird, a sex of the bird, an age of the bird, and whether the feature descriptor derived from the at least one image of the foot of the bird relates to a left foot of the bird or a right foot of the bird. Furthermore, the computer-executable instructions, when executed by the at least one processor, may cause the at least one processor to: process the image portion to obtain an indication of an orientation of the bird at the first bird station; and identify the subset of the reference data in accordance with the obtained indication of the orientation of the bird, such that the subset of the reference data comprises feature descriptors that are limited to feature descriptors derived from respective images of either a left foot or a right foot of each bird of the plurality of different birds.

In the first example aspect or any of its example embodiments set out above, the reference data may, in accordance with an example embodiment, further comprise a respective indication of a date on which the respective image of the foot of each bird of the plurality of different birds was captured, and the computer-executable instructions, when executed by the at least one processor, may further cause the at least one processor to identify a second subset of the reference data using a date of capture of the image captured by the imaging device of a first bird station of the plurality of bird stations, wherein the processing of the image data from the first bird station to determine whether the bird at the first bird station can be identified as being one of the plurality of different birds uses feature descriptors that are limited to the feature descriptors in the second subset of the reference data.

In the first example aspect or any of its example embodiments set out above, the reference data may further comprise a respective indication of a geographical location at which the respective image of the foot of each bird of the plurality of different birds was captured, and the computer-executable instructions, when executed by the at least one processor, may further cause the at least one processor to identify a third subset of the reference data using an indication of a geographical location at which the image captured by the imaging device of a first bird station of the plurality of bird stations was captured, wherein the processing of the image data from the first bird station to determine whether the bird at the first bird station can be identified as being one of the plurality of different birds uses feature descriptors that are limited to the feature descriptors in the third subset of the reference data.

In the first example aspect or any of its example embodiments set out above, each bird station of the plurality of bird stations may further comprise a respective wireless transmitter arranged to wirelessly transmit the image data from the bird station to the data processing apparatus.

Additionally or alternatively, the data processing system may comprise a plurality of processors, and a plurality of memories storing computer-executable instructions that, when executed by the processors, cause the processors to generate the bird tracking data, and the imaging device of each of the bird stations may comprise a respective processor of the plurality of processors and a respective memory of the plurality of memories, the respective memory storing computer-executable instructions that, when executed by the respective processor, cause the respective processor to generate, as the respective image data, one or more feature descriptors derived from the respective image captured by the imaging device. The system may further comprise a data processing hub arranged to receive the respective one or more feature descriptors from the respective processor of each imaging device, the data processing hub comprising a processor of the plurality of processors and a memory of the plurality of memories which stores the reference data and the computer-executable instructions that, when executed by the processor of the data processing hub, cause the processor of the data processing hub to process the respective one or more feature descriptors generated by the respective processor of each of the bird stations to generate the bird tracking data.

There is provided, in accordance with a second example aspect herein, a computer-implemented method of generating bird tracking data for tracking a movement of an individual bird in a region comprising a plurality of bird stations, wherein each bird station provides at least one of food, drink, bathing, nesting and shelter for birds, and comprises a respective imaging device arranged to generate respective image data by capturing a respective image which shows at least part of a foot of a bird visiting the bird station. The method is performed by a data processing apparatus comprising at least one processor, and at least one memory storing computer-executable instructions that, when executed by the at least one processor, cause the at least one processor to perform the method, and the method comprises processing the respective image data from each bird station of the plurality of bird stations using reference data which comprises, for each bird of a plurality of different birds, a respective set of feature descriptors derived from at least one image of a foot of the bird, and respective bird identification information which identifies the bird, to determine whether the bird visiting the bird station can be identified as being one of the plurality of different birds. The method further comprises performing, for each bird station of the plurality of bird stations, processes of: in case it is determined that the bird visiting the bird station can be identified as being one of the plurality of different birds, generating a respective item of the tracking data, which item comprises (i) respective identification information which identifies the one of the plurality of different birds, (ii) respective location information indicative of a geographical location of the bird station, and (iii) a respective indication of a time at which the bird visited the bird station; and in case it is determined that the bird visiting the bird station cannot be identified as being one of the plurality of different birds, generating an indicator indicating that the bird cannot be identified as being one of the plurality of different birds.

In an example embodiment, the respective image data from each bird station of the plurality of bird stations may be processed to determine whether the bird visiting the bird station can be identified as being one of the plurality of different birds by processing the image data to generate a set of feature descriptors of the respective image; calculating a respective degree of similarity between the generated set of feature descriptors and each of one or more of the sets of feature descriptors in the reference data; and determining, based on the calculated degrees of similarity, whether the bird visiting the bird station can be identified as being one of the plurality of different birds.

In the example embodiment, the respective image data from each bird station of the plurality of bird stations may, in accordance with an example embodiment, be processed to generate the respective set of feature descriptors by segmenting the respective image to isolate a part of the image representing an image of the at least part of the foot of the bird at the bird station from a remainder of the image, and processing the isolated part of the image to generate the respective set of feature descriptors of the image.

In the second example aspect or any of its example embodiments set out above, in case it is determined that the bird visiting first a bird station of the plurality of bird stations can be identified as being one of the plurality of different birds, the set of feature descriptors in the reference data for the one of the plurality of different birds may be updated using at least one new feature descriptor which is derived from the image captured by the imaging device of the first bird station. In this example embodiment, in case it is determined that the bird visiting a first bird station of the plurality of bird stations cannot be identified as being one of the plurality of different birds, the reference data may be updated to include at least one new feature descriptor which is derived from image captured by the imaging device of the first bird station, and associated new bird identification information which indicates a newly assigned identity of the bird visiting the first bird station.

In the second example aspect or any of its example embodiments set out above, the imaging device of a first bird station of the plurality of bird stations may generate the image data by capturing a first set of images of at least part of the foot of the bird visiting the first bird station, which first set of images includes the image captured by the imaging device of the first bird station, and the first bird station may further comprise a second imaging device which captures a second set of images, each image of the second set of images showing a feathered portion of a bird at the first bird station, the second set of images having been captured while the first set of images was being captured. In this example embodiment, the computer-implemented method may further comprise: determining, by analysing the second set of images, whether the same bird was imaged in the images of the second set of images; in case it is determined that the same bird was imaged in the images of the second set of images, and that the bird visiting the first bird station can be identified as being one of the plurality of different birds, updating the reference data for the one of the plurality of different birds using at least one new feature descriptor which is derived from at least one image in the first set of images; in case it is determined that the same bird was imaged in the images of the second set of images, and that the bird visiting the first bird station cannot be identified as being one of the plurality of different birds, updating the reference data to include at least one new feature descriptor which is derived from at least one image in the first set of images, and new bird identification information which indicates a newly assigned identity of the bird visiting the first bird station; and in case it is determined that the same bird was not imaged in the images of the second set of images, generating an indicator which indicates that the reference data is not to be updated using at least one image in the first set of images.

In the second example aspect or any of its example embodiments set out above, the reference data may further comprise, for each bird of the plurality of different birds, a respective indication of one or more attributes relating to the bird, and a first bird station of the plurality of bird stations may further comprise a second imaging device which captures a second image of the bird at the first bird station, wherein the second image comprises an image portion which shows a feathered portion of the bird at the first bird station. In this example embodiment, the computer-implemented method further comprises: processing the image portion to obtain an indication of at least one attribute of the one or more attributes which relates to the bird at the first bird station; and identifying a subset of the reference data using the obtained indication. The processing of the image data from the first bird station to determine whether the bird at the first bird station can be identified as being one of the plurality of different birds uses feature descriptors that are limited to the feature descriptors in the identified subset of the reference data.

In the second example aspect or any of its example embodiments set out above, the reference data may further comprise, for each bird of the plurality of different birds, a respective indication of one or more attributes relating to the bird, and the image captured by the imaging device of a first bird station of the plurality of bird stations may comprise an image portion which shows a feathered portion of the bird at the first bird station. In this example embodiment, the computer-implemented method further comprises: processing the image portion to obtain an indication of at least one attribute of the one or more attributes which relates to the bird at the first bird station; and identifying a subset of the reference data using the obtained indication. Furthermore, the processing of the image data from the first bird station to determine whether the bird at the first bird station can be identified as being one of the plurality of different birds uses feature descriptors that are limited to the feature descriptors in the identified subset of the reference data. In this example embodiment, the one or more attributes may comprise one or more of a species of the bird, a sex of the bird, an age of the bird, and whether the feature descriptor derived from the at least one image of the foot of the bird relates to a left foot of the bird or a right foot of the bird. The image portion may be processed to obtain an indication of an orientation of the bird at the first bird station, and the subset of the reference data may be identified in accordance with the obtained indication of the orientation of the bird, such that the subset of the reference data comprises feature descriptors that are limited to feature descriptors derived from respective images of either a left foot or a right foot of each bird of the plurality of different birds.

In the second example aspect or any of its example embodiments set out above, the reference data may further comprise a respective indication of a date on which the respective image of the foot of each bird of the plurality of different birds was captured, and the computer-implemented method may further comprise identifying a second subset of the reference data using a date of capture of the image captured by the imaging device of a first bird station of the plurality of bird stations, wherein the processing of the image data from the first bird station to determine whether the bird at the first bird station can be identified as being one of the plurality of different birds uses feature descriptors that are limited to the feature descriptors in the second subset of the reference data. Additionally or alternatively, the reference data may further comprise a respective indication of a geographical location at which the respective image of the foot of each bird of the plurality of different birds was captured, and the computer-implemented method may further comprise identifying a third subset of the reference data using an indication of a geographical location at which the image captured by the imaging device of a first bird station of the plurality of bird stations was captured, wherein the processing of the image data from the first bird station to determine whether the bird at the first bird station can be identified as being one of the plurality of different birds uses feature descriptors that are limited to the feature descriptors in the third subset of the reference data.

There is also provided, in accordance with a third example aspect herein, a computer program comprising computer-executable instructions that, when executed by at least one processor, cause the at least one processor to perform any of the methods set out above. The computer program may be stored on a non-transitory computer-readable storage medium (such as a computer hard disk or a CD, for example) or carried by a computer-readable signal.

There is also provided, in accordance with a fourth example aspect herein, a computer comprising at least one processor and a storage medium storing computer-executable instructions that, when executed by the at least one processor, cause the at least one processor to perform any of the methods set out above.

### [Brief Description of the Drawings]

Example embodiments will now be explained in detail, by way of non-limiting example only, with reference to the accompanying figures described below. Like reference numerals appearing in different ones of the figures can denote identical or functionally similar elements, unless indicated otherwise.
Figure 1 is a schematic illustration of a system for identifying and tracking an individual bird according to a first example embodiment herein.
Figure 2 is a schematic illustration of an example implementation of the data processing apparatus 30-1 in programmable signal processing hardware.
Figure 3 is a flow diagram illustrating a method according to a first example embodiment herein, by which the processor 40 attempts to identify and generate an item of tracking data for an individual bird based on image data of the bird.
Figure 4 is an example of an image acquired by the imaging device 20 of the first example embodiment, which comprises an image portion showing the foot of the bird, and an image portion showing a feathered portion of the bird.
Figure 5 is a flow diagram illustrating a process by which the processor 40 may process the image data in process S20 of Figure 3 to determine whether the bird can be identified.
Figure 6A shows a cropped version of the image in Figure 4, obtained by cropping the image in Figure 4 to retain the image of the underside of the right foot of the bird whilst excluding the image of the underside of its left foot.
Figure 6B illustrates an example of a mask for image segmentation, which has been obtained from the image in Figure 6A.
Figure 7A shows a cropped version of the image in Figure 4, obtained by cropping the image in Figure 4 to retain the image of the underside of the left foot of the bird whilst excluding the image of the underside of its right foot.
Figure 7B illustrates another example of a mask for image segmentation, which is obtained by performing edge detection on the image in Figure 7A.
Figure 8 shows on its right-hand side a segmented version of the image of the right foot of the bird of Figure 6A, which has been obtained using the mask of Figure 6B, and a segmented version of different image of the right foot of the same bird on the left-hand side, as well as lines connecting key-points in the left-hand image to matching key-points in the right-hand image.
Figure 9 shows on its right-hand side another segmented image of a foot of a bird, and a segmented version of different image of the foot of the same bird on the left-hand side, as well as lines connecting key-points in the left-hand image to matching key-points in the right-hand image.
Figure 10 shows a tabular representation of the reference data 70 in the first example embodiment.
Figure 11 is an example of an image showing a bird with its plumage, from which one or more attributes of the bird can be determined.
Figure 12 is a schematic illustration of a system for identifying and tracking an individual bird according to a second example embodiment herein.
Figures 13 and 14 show a flow diagram illustrating a method according to the second example embodiment herein, by which the processor 40 attempts to identify and generate an item of tracking data for an individual bird based on image data of the bird.
Figure 15 shows an image of an underside of a foot of a lizard.

### [Detailed Description of Example Embodiments]

### [First Example Embodiment]

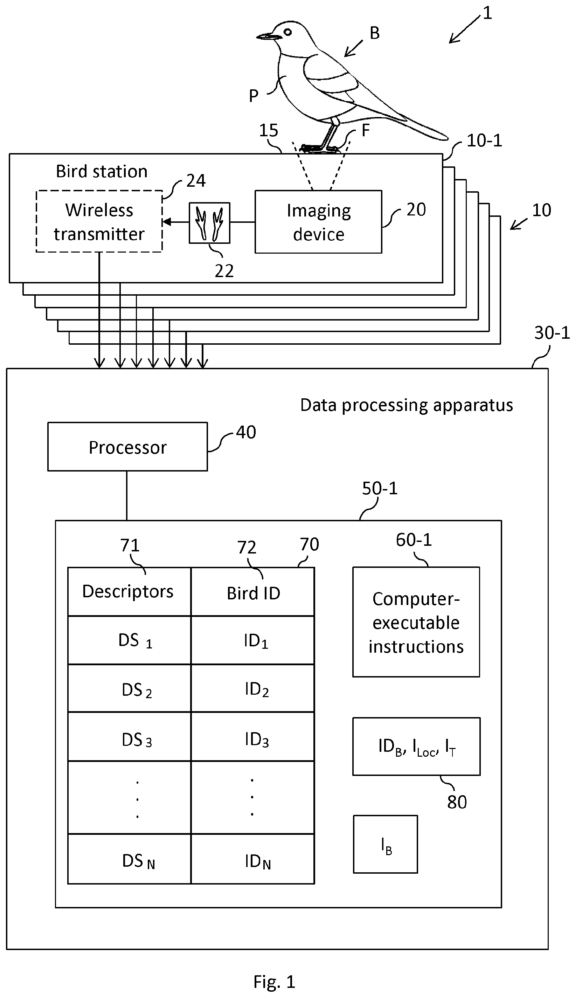

Figure 1 is a schematic illustration of a system 1 for identifying and tracking movements of an individual bird across a geographical region according to a first example embodiment herein. As will become apparent from the following description, the system 1 may allow an individual bird to be identified and tracked non-invasively such that it is not required to depart from its natural behaviour, and in a fully automated and unsupervised way.

The system 1 comprises a plurality of bird stations 10, which are distributed across the whole world, one or more continents, one or more countries or any other geographical region(s). In the following, one of these bird stations, namely bird station 10-1, is described in detail, and each of the remaining bird stations 10 in the system 1 may be configured in accordance with the following description of bird station 10-1 or any of its variants set out below, regardless of the configurations of the other bird stations in the system 1, unless stated or required otherwise.

The bird station 10-1 may, as in the present example embodiment, be provided in the form of a bird feeder which provides food for birds. The bird station 10-1 may additionally or alternatively provide at least one of drink, bathing, nesting and shelter for birds, for example. The bird station 10-1 comprises a surface 15 on which a bird B visiting the bird station 10-1 can stand or lay. The surface 15 may, as in the present example embodiment, be provided on a perch for the bird B that forms part of the bird station 10-1. The surface 15 may alternatively be part of a floor of the bird station 10-1 in case the bird station 10-1 provides nesting or shelter for visiting birds or where the bird station is provided in the form of a bird table, for example.

The bird station 10-1 comprises an imaging device 20, which is arranged to generate image data by capturing an image 22 which shows at least part of an underside region of a foot F of the bird B visiting the bird station 10-1.

The operation of the imaging device 20 to capture the image 22 (which may be included in a sequence of images captured by the imaging device 20) may be triggered by the detection of an arrival of the bird B at the bird station 10-1 by a sensor (not shown) which is communicatively coupled to the imaging device 20. The sensor may form part of the system 1 (either as part of the bird station 10-1 or a stand-alone component), and may take any form known to those skilled in the art that is suitable for detecting the arrival of a bird at the bird station 10-1. For example, the sensor may be a proximity sensor (e.g. a UV sensor, infrared (IR) sensor or a passive IR (PIR) sensor) which can detect the presence of the bird B when the bird B comes within a detection range of the proximity sensor. The sensor may take the form of a vertical cavity surface emitting laser (VCSEL), which is arranged to generate a beam having a narrow focus and limited range. Such an arrangement was found to work well to cause the imaging device 20 to be activated only when the bird B is on the surface 15. In particular, using a VCSEL was found to be helpful for reducing or eliminating environmental noise and false triggers, such as those caused by a bird flying past the bird station 10-1 or the movement of a bush with the wind in case the bird station 10-1 is placed near the bush.

The imaging device 20 may, as in the present example embodiment, be provided in the form of a digital camera, which employs optical sensors to capture colour (e.g. RGB) or greyscale digital images (e.g. photographs and/or film) of at least part of an underside region of one or both feet of the bird B, where the extent to which the bird's feet are imaged dependents on how the bird is positioned in the field of view of the digital camera during the imaging. Where the imaging device 20 is provided in the form of a digital camera, the surface 15 is provided on a transparent part of the perch or floor of the bird station 10-1, for example, so that the digital camera can capture images of the underside of the bird's feet through the transparent part.

Where the bird station 10-1 is intended to cater for birds that are nocturnal, for example, an infrared (IR) band-pass filter may be provided to filter light passing through the surface 15 on the transparent part of the perch or floor of the bird station 10-1, such that that the digital camera captures IR images of the underside of the bird's feet. One or more IR light sources (e.g. IR light-emitting diodes, LEDs) may in that case be provided to illuminate the underside of the bird's feet during imaging by the digital camera, with the IR light source(s) preferably being arranged to reduce or eliminate artefacts in the captured images that are caused by reflections of the IR light from surfaces other than the underside of the bird's feet (e.g. a surface of the transparent part facing the digital camera). The camera preferably does not have an internal IR-blocking filter, as is often provided in front of the sensor of a digital camera to block IR light. Removing such IR filter from the camera (where originally present) may allow the camera to acquire IR images with shorter exposure times and/or with less intense illumination from the IR source(s) being required.

For birds that are diurnal, the IR filter and the IR light sources may also be used, in order to minimise disturbance of visiting birds during imaging, although these are not required. The inventors have found that illumination of the underside of at least some diurnal birds' feet by visible light (from visible light LEDs, for example) during imaging tends not to disturb the birds. Housing the camera in a transparent housing made of a transparent polymer material (e.g. polycarbonate, PMMA, etc.), for example, may allow ambient light to illuminate the underside of the bird's feet, thus reducing the level of illumination which the light source is required to provide for the imaging, or dispensing with the need to provide such a light source altogether, depending on characteristics of the digital camera such as its dynamic range and the amount of backlighting of the bird's feet, for example.

The imaging device 20 need not rely on optical sensors, however, and may alternatively employ an array of capacitive sensors on the surface 15, which are of the kind used in fingerprint scanning, for example, to generate the image 22 showing at least part of the underside region of a foot F of the bird B visiting the bird station 10-1. As another alternative, the imaging device 20 may employ an ultrasonic transmitter and receiver, and a processor for reconstructing the 3D structure of the underside of bird's feet from the reflected ultrasonic signal, like some commercially available ultrasonic fingerprint readers. As a further alternative, the imaging device 20 may employ a thermal scanner to generate the image 22. In all of these cases, the imaging device 20 can acquire images with sufficiently high resolution for identifying the bird B, in a safe and non-invasive manner which does affect the natural behaviour of the bird B.

The bird station 10-1 may, as in the present example embodiment, further comprise a wireless transmitter 24, which is arranged to wirelessly transmit the image data to a data processing apparatus 30-1 which forms part of the system 1 and is remote from the bird station 10-1. The wireless transmitter 24 may wirelessly transmit the image data to a local wireless access point that may be provided in the system 1, using any suitable wireless network protocol (e.g. Bluetooth^{®}) within a wireless personal area network (WPAN) or any suitable wireless network protocol (e.g. one based on the IEEE 802.11 family of standards, collectively referred to as Wi-Fi^{®}) within a wireless local area network (WLAN), for example, with the image data then being communicated from the wireless access point to the data processing apparatus 30-1 via the Internet, as in the present example embodiment. The form of the wireless transmitter 24 is not so limited, however, and the wireless transmitter 24 may alternatively be arranged to transmit the image data to the remote data processing apparatus 30-1 via a cellular network, using the GPRS, GSM, UMTS, EDGE, 3G, 4G/LTE or 5G mobile network technology, for example.

As illustrated in Figure 1, the data processing apparatus 30-1 comprises a processor 40 and a memory 50-1 comprising one or more data storage devices which store computer-executable instructions 60-1 that, when executed by the processor 40, cause the processor 40 to perform a method of attempting to identify and track an individual bird based on the image data generated by the imaging devices 20 of the bird stations 10, as described below. It should be noted that the data processing apparatus 40 may have more than one processor and more than one memory storing computer-executable instructions that, when executed by the processors, cause the processors to perform the method of attempting to identify and track movements of an individual bird described below.

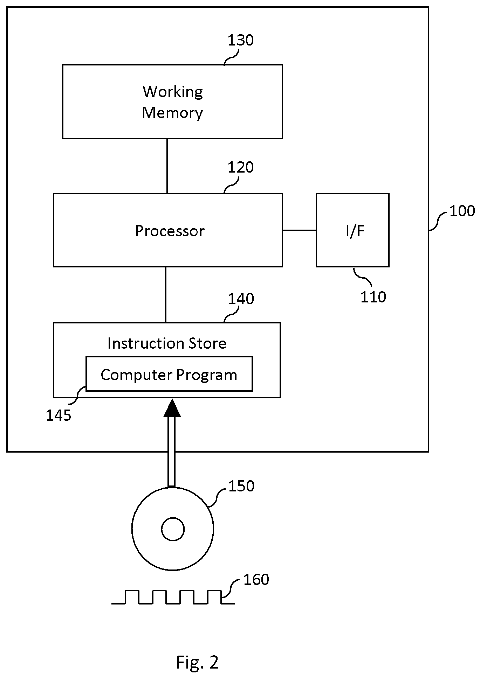

The data processing apparatus 30-1 may be provided in the form of a server or other type of computer 100 having data storage and processing components as illustrated schematically in Figure 2.

The computer 100 comprises a communication interface (I/F) 110, for receiving image data in the form of one or more digital images captured by the respective imaging device 20 of each of the bird stations 10, a segmented version of the digital image(s), or one or more image feature descriptors (in the form of image feature vectors or matrices) derived from the digital image(s) or the segmented version thereof, for example, and in some example embodiments also information on the time and/or location at which the images were captured, which may be communicated to the communication interface 110 as part of the image data or separately. Where the bird station comprises a second imaging device arranged to capture one or more images of a featured portion of the bird B (as in the case of the second example embodiment described below), the communication interface 110 may also receive the image(s) captured by the second imaging device. The communication interface 110 also serves to output identification information which identifies the bird B and/or tracking data as described below.

The computer 100 further comprises a processor 120 in the form of a Central Processing Unit (CPU) and/or a Graphics Processing Unit (GPU), a working memory 130 (e.g. a random-access memory) and an instruction store 140 storing a computer program 145 comprising the computer-readable instructions which, when executed by the processor 120, cause the processor 120 to perform the various functions of the data processing apparatus 30-1 described herein. The processor 120 is an example implementation of the processor 20 of the data processing apparatus 30-1 of Figure 1, and the working memory 130 and the instruction store 140 are an example implementation of the memory 50-1 of the data processing apparatus 30.

The working memory 130 stores information used by the processor 120 during execution of the computer program 145, such as the reference data 70 shown in Figure 1, calculated degrees of similarity between feature descriptors that are being compared by a matching algorithm and other intermediate results obtained in the processes described below, an indicator I_{B} indicating that the bird B cannot be identified, or (where the bird B can be identified) an item of tracking data 80 comprising (i) identification information ID_{B} which identifies the bird B, (ii) location information I_{Loc} indicative of a geographical location of the bird station 10-1, and (ii) an indication I_{T} of a time at which the bird B visited the bird station 10-1. The instruction store 140 may comprise a ROM (e.g. in the form of an electrically erasable programmable read-only memory (EEPROM) or flash memory) which is pre-loaded with the computer-readable instructions 60-1. Alternatively, the instruction store 140 may comprise a RAM or similar type of memory, and the computer-readable instructions 60-1 of the computer program 145 can be input thereto from a computer program product, such as a non-transitory, computer-readable storage medium 150 in the form of a CD-ROM, DVDROM, etc. or a computer-readable signal 160 carrying the computer-readable instructions 60-1. In any case, the computer program 145, when executed by the processor 120, causes the processor 120 to perform the functions of the data processing apparatus 30-1 described herein. It should be noted that some functions of the data processing apparatus 30-1 may be implemented in non-programmable hardware, such as an ASIC, an FPGA or other integrated circuit dedicated to performing these functions, or a combination of such non-programmable hardware and programmable hardware as described above with reference to Figure 2.

Referring again to Figure 1, the memory 50-1 of the data processing apparatus 30-1 includes reference data 70, which comprises, for each bird of a plurality, N, of different birds, a respective set of local image feature descriptors, DS₁ to DS_{N}, derived from at least one image of an underside region of a foot of the bird, and respective bird identification information, ID₁ to ID_{N}, which may take any form suitable for identifying the bird, such as an integer number. As will be described in more detail in the following, each feature descriptor in each set of feature descriptors DS₁ to DS_{N} may be generated by an image feature extraction and description algorithm performed by the processor 40 in accordance with the computer-executable instructions 60-1, and may be stored as a feature vector or a feature matrix.

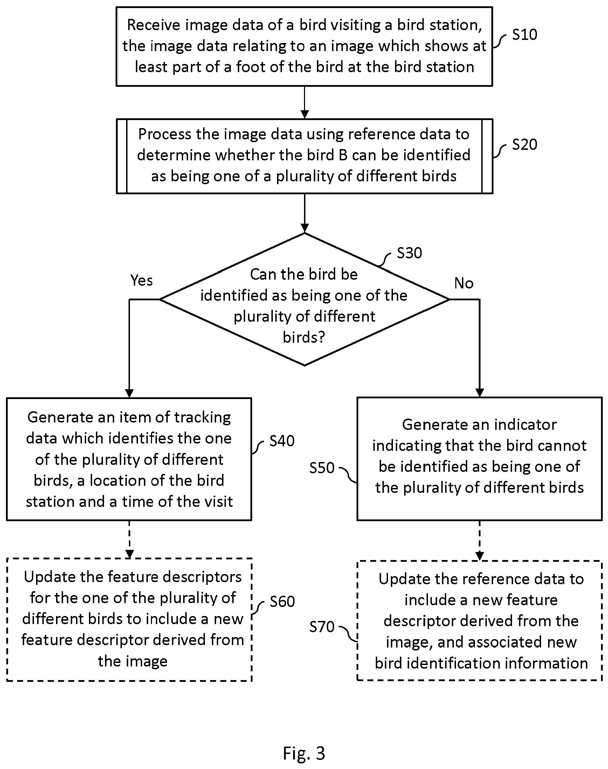

The process by which the processor 40 attempts to identify an individual bird and generate an item of tracking data 80 based on image data of the bird in the present example embodiment will now be described with reference to Figure 3.

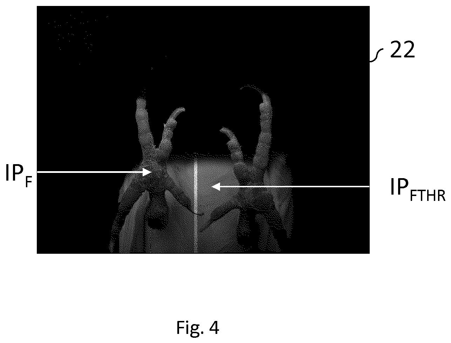

In process S10 of Figure 3, the processor 40 receives image data of the bird B visiting the bird station 10-1, the image data comprising an image 22 which shows at least part of an underside region of a foot F of the bird B at the bird station 10-1. The image 22 may, as in the present example embodiment, be an image of a set of images, each image of the set of images showing at least part of the underside region of a foot F of the bird B, which has been captured by the imaging device 20 and received by the processor in process S10. It should be noted that, although the digital camera forming the imaging device 20 in the present example embodiment is arranged to capture images of the underside of the bird's feet by being disposed underneath the bird B visiting the bird station 10-1, with the camera's optical axis being substantially vertical, the camera's optical axis may alternatively lie in a substantially horizontal plane (or angled downward from the horizontal plane) such that the camera can capture front-views, side-views, back-views of the bird B or an intermediate of these views (depending on the bird's orientation) as it is visiting the bird station 10-1. In this alternative, the digital camera captures images showing a top side of at least one of the bird's feet, as well as a feathered portion P of the bird B. The top side of a bird's foot F comprises similar distinctive features as the underside of the foot F, which can allow the individual bird to be identified. The feathered portion P may also be imaged in the case where the optical axis of the camera is substantially vertical, provided the camera has sufficient depth-of-field, dynamic range etc. to image both the underside of the bird's foot F and the feathered portion P. Figure 4 shows an example of image 22 acquired by the digital camera in the present example embodiment, which comprises an image portion IP_{F} showing the foot F of the bird B (in this case, a Eurasian Bullfinch), and an image portion IP_{FTHR} showing a feathered portion P of the bird B.

Referring again to Figure 3, in process S20, the processor 40 processes the image data using the reference data 70 to determine whether the bird B can be identified as being one of the N different birds that have previously been registered in the reference data 70. As noted above, the reference data 70 comprises, for each bird of a plurality of different birds, a respective set of local feature descriptors DS₁ to DS_{N} that are derived from at least one image of a top side or an underside region of a foot of the bird (as the case may be), and respective bird identification information ID₁ to ID_{N} which identifies the bird.

In case the processor 40 determines in process S20 that the bird B can be identified as being one of the plurality of different birds ("Yes" at S30 in Figure 3), the processor 40 generates in process S40 of Figure 3 an item of the tracking data 80 comprising identification information ID_{B} which identifies the one of the plurality of different birds, location information I_{Loc} indicative of a geographical location of the bird station 10-1, and an indication I_{T} of a time at which the bird B visited the bird station 10-1 (e.g. a time at which image 22 or another image in the set of images was captured). The processor 40 may store the item of tracking data 80 in the memory 50-1 of Figure 1, and in at least the working memory 130 in the example implementation of Figure 2. The processor 40 may furthermore correlate the identification information ID_{B} with one or more subscribers that are associated with the identification information ID_{B}, and furthermore look up in a subscriber database (which may be provided in memory 50-1) a respective personal bird identifier (e.g. "My robin") in a respective record of each of the associated subscribers, which identifier has been assigned to the bird B by the subscriber. The processor 40 may transmit to a smartphone, tablet computer, PC or other user terminal of an associated subscriber (e.g. using a network address of the terminal which may also be stored in the subscriber's record in the subscriber database) a notification that the bird identified by the personal identifier has visited the bird station 10-1.

The subscriber's user terminal may also be provided with additional information, such as one or more of (i) the time of the visit, (ii) the location of the bird station 10-1, (iii) one or more of the images of the bird B captured during its visit to the bird station 10-1 (e.g. one or more still images of the bird B and/or a video clip of the bird), and (iv) an identified species of the bird B, in cases where the captured image(s) show a feathered portion of the bird B that allows the species to be identified by a trained machine learning model, examples of which are known in the art. The processor 40 may look up a registered location of the bird station 10-1 (which may be derived from a postal address provided by an owner of the bird station 10-1 during product registration, for example) using a unique device identifier assigned to the bird station 10-1, which may be sent from the bird station 10-1 to the data processing apparatus 30-1 together with the image data. The processor 40 may look up the location of the bird station 10-1 in a database or the like (which may be provided in memory 50-1), which stores a unique device identifier of each bird station of the plurality of different bird stations 10 in association with respective geographical location of the bird station. The processor 40 may determine the time of the visit using a timestamp, which may be generated by the imaging device 20 together with the image data and sent to the processor 40 with the image data. The processor 40 may alternatively estimate the time of the visit by recording a time of receipt of the image data, for example.

A subscriber may thus be provided with an item of tracking data 80 for tracking an individual bird B each time the bird B has been imaged while visiting a bird station of the plurality of bird stations 10 and identified from that visit as being one of the plurality of birds in the reference data 70. Such items of tracking data 80 for the bird B may be collated and used to generate an image showing a movement pattern of the bird B, which may be displayed (e.g. as an overlay on a map) on a display provided on the subscriber's terminal or elsewhere.

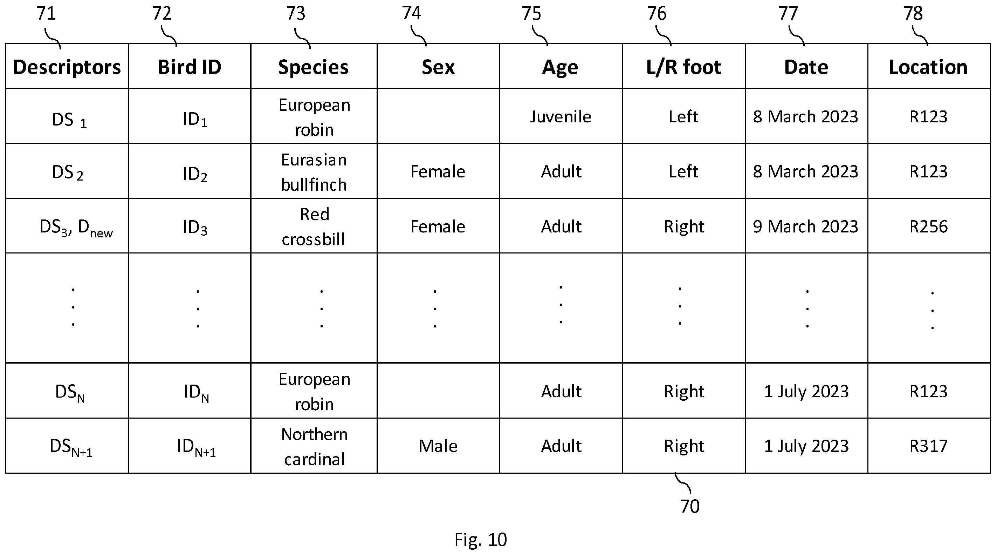

In case the processor 40 determines in process S20 of Figure 3 that the bird B can be identified as being one of the plurality of different birds ("Yes" at S30 in Figure 3), the processor 40 may, in optional process S60, update the set of feature descriptors in the reference data 70 for the one of the plurality of different birds to include at least one new feature descriptor which is derived from the image 22. For example, as shown in Figure 10, in case the bird B is identified as being the bird with identifier "ID₃" in the reference data 70, the set of feature descriptors DS₃ for that bird may be supplemented with a new feature descriptor, D_{new}, which is derived from the image 22.

On the other hand, in case the processor 40 determines in process S20 of Figure 3 that the bird B cannot be identified as being one of the plurality of different birds ("No" at S30), the processor 40 generates in process S50 of Figure 3 an indicator I_{B} indicating that the bird B cannot be identified as being one of the plurality of different birds, and may store the indicator I_{B} in the memory 50-1 (specifically, in at least the working memory 130 in the example implementation of Figure 2), at least temporarily. In this case, the processor 40 may (as shown in Figure 10) also update the reference data 70, in optional process S70 in Figure 3, to include at least one new feature descriptor, D_{N+1}, which is derived from image 22, and associated new bird identification information, ID_{N+1}, which indicates a newly assigned identity of the bird B.

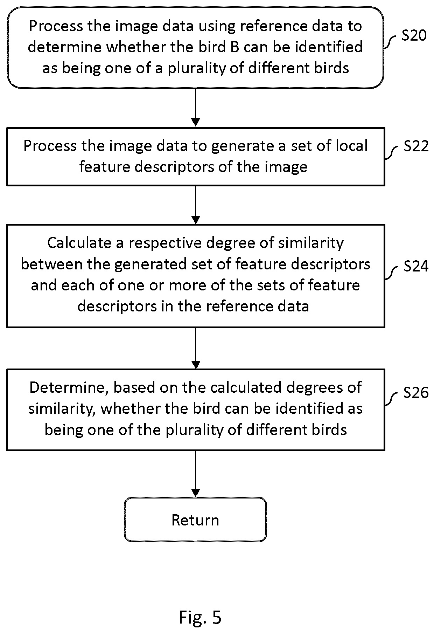

As example of the process by which the processor 40 processes the received image data in process S20 of Figure 3 using reference data 70 to determine whether the bird B can be identified as being one of a plurality of different birds will now be described in more detail with reference to Figure 5.

In process S22 of Figure 5, the processor 40 processes the image data to generate a set of local feature descriptors of the image 22. Where the image data is of a set of images of at least a portion of the underside of one or both feet of the bird B at the bird station 10-1, the processor 40 may generate a respective set of feature descriptors for each of the images in the set of images, and process each set of feature descriptors as described below in relation to the feature descriptors generated from image 22. The feature descriptors in each of the sets of feature descriptors DS₁ to DS_{N} in the reference data 70 may likewise be generated in the same way as the feature descriptors that are generated from image 22 in the manner described below.

In more detail, where the image 22 is a colour image (e.g. an RGB image), as in the present example embodiment, the processor 40 may firstly convert the colour image 22 into a greyscale version of the image. The processor 40 then processes the greyscale version of the image 22 or the original image 22 (where this has been created as a greyscale image) firstly using a feature extraction algorithm (also commonly referred to as a feature detection algorithm) which identifies image features in the image 22, where each feature is in the form of a point, line, junction or blob, for example. The feature extraction algorithm outputs image key-points in the form of co-ordinates that indicate the locations of the image features in the image 22. The processor 40 furthermore processes the image 22 using a feature description algorithm, which generates an image feature descriptor for each image feature based on local image gradient information or local image intensity in an area around the corresponding key-point (also commonly referred to as a feature-point or an interest-point) output by the feature extraction algorithm. The image descriptors describe the local appearance around each key-point and enable effective recognition of the key-point features for matching. The feature descriptors describe the local appearance around each key-point in a way that is preferably invariant to translations, rotations and scaling of the foot F in the image 22, and more preferably also invariant to limited affine transformations and/or illumination/contrast changes of the image 22. The image information around the extracted image key-points is thus transformed into the corresponding image descriptors, which are often stored in the form of low-dimensional vectors or matrices.

There are many known types of feature extraction algorithm and feature description algorithm, and many of these are independent of each other such that a feature extraction and description algorithm may be tailored to a particular application by selecting an effective combination of a feature extraction algorithm and a feature description algorithm. Examples of feature extraction algorithms include the Harris Corner Detector, Hessian, Fast Hessian, Shi-Tomasi Corner Detector and Harris-Laplace detection algorithms, Good Features to Track, Local Binary Pattern (LBP), Small Univalue Segment Assimilating Nucleus (SUSAN), Features from Accelerated Segment Test (FAST), and Blob Detectors with Laplacian of Gaussian (LoG), Difference of Gaussian (DoG) or Determinant of Hessian (DoH), among others. Examples of feature description algorithms include Histograms of Oriented Gradients (HoG), and Binary Robust Independent Elementary Features (BRIEF), among others. Algorithms are also known (so-called "feature detection and description" algorithms) that combine a particular feature extraction algorithm with a designated feature description algorithm, and these include Scale Invariant Feature Transform (SIFT), Speeded Up Robust Features (SURF) and KAZE, which generate string-based (or 'float') descriptors, and AKAZE, Oriented FAST and Rotated BRIEF (ORB) and Binary Robust Invariant Scalable Key-points (BRISK), which generate binary descriptors. The KAZE algorithm was found to perform particularly well in individual bird identification based on images of birds' feet and is employed in the present example embodiment.

Although the processor 40 may extract the image feature key-points by applying the feature extraction algorithm or the feature extraction and description algorithm to the image 22 as a whole, as described above, it may be advantageous for the processor 40 to pre-process the image 22 before this is done, by segmenting the image 22 to isolate a part of the image 22 representing an image of the at least part of the underside region of the foot F of the bird B at the bird station 10-1 from a remainder of the image 22, and processing the isolated part of the image by the feature extraction algorithm or the feature extraction and description algorithm to generate the set of feature descriptors of the image 22. This segmentation pre-process limits the image data, which the feature extraction algorithm or the feature extraction and description algorithm is required to process, to only the relevant part(s) of the image 22 showing the bird's foot/feet, thereby making the feature extraction process less computationally expensive. The images, from which the sets of feature descriptors DS₁ to DS_{N} in the reference data 70 are derived, may be similarly segmented before feature descriptors are generated from the segmented images to form the sets of feature descriptors DS₁ to DS_{N} in the reference data 70.

The processor 40 may perform the image segmentation using any known image segmentation technique that is suitable for this task. For example, edge detection techniques (e.g. Canny, Sobel or Laplacian of Gaussian (LoG) edge detection) may be used where the bird's foot/feet are the only objects that are in focus in the image being processed and can therefore be easily distinguished from the surrounding background. Simple thresholding (global or adaptive, depending on image characteristics) may be used where there is sufficient difference in brightness between the bird's feet in the image and the surrounding parts of the image. The processor 40 may alternatively use a clustering algorithm, such as K means clustering, mean shift clustering, hierarchical clustering or fuzzy clustering, to perform the segmentation. Further alternatives include those based on deep learning techniques, where, for example, manually labelled images may be used to train a neural network (NN), such as U-Net, SegNet or DeepLab, to perform the image segmentation.

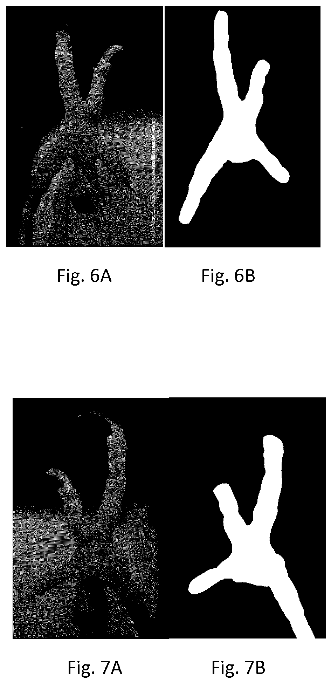

Figure 6A shows a cropped version of the image in Figure 4, obtained by cropping the image in Figure 4 to retain the image of the underside of the right foot of the bird B whilst excluding the image of the underside of its left foot. Figure 6B illustrates a mask for the image segmentation described above, which may be employed where edge detection is used to define the boundaries of the bird's foot/feet, for example. When the mask of Figure 6B is registered with the image 22 and used to isolate a part of the image 22 representing the image of the underside region of the bird's right foot from the remainder of the image 22, pixels of the image 22 overlaid by the white portion of the mask in Figure 6B are retained, while pixels within the black portion of the mask are discarded from further processing operations. Similarly, Figure 7A shows a cropped version of the image in Figure 4, obtained by cropping the image in Figure 4 to retain the image of the underside of the left foot of the bird B whilst excluding the image of the underside of its right foot. Figure 7B illustrates a mask which may be used to extract an image portion of the cropped image of Figure 7A containing the image of the underside of the bird's left foot, from the remainder of that cropped image.

Referring again to Figure 5, in process S24, the processor 40 calculates a respective degree of similarity (i.e. a respective closeness in the multi-dimensional space of the feature descriptors) between the generated set of feature descriptors and each of one or more of the sets of feature descriptors DS₁ to DS_{N} in the reference data 70. A degree of similarity between two descriptors may be calculated using a distance metric (e.g. the L1-norm or L2-norm) or a histogram-based metric (e.g. χ² or Earth Mover's Distance) for string-based descriptors, such as those produced by the SIFT, SURF and KAZE algorithms, for example, and Hamming distance for binary descriptors, such as those produced by the AKAZE, ORB and BRISK algorithms, for example. The processor 40 may, as in the present example embodiment, use a brute-force approach to calculate, for each set of feature descriptors DSᵢ of the one or more of the sets of feature descriptors DS₁ to DS_{N} in the reference data 70, respective distance metric values or Hamming distances (as the case may be) for every combination of a feature descriptor taken from the set of feature descriptors derived from the image 22 and a feature descriptor taken from set of feature descriptors DSᵢ, and then count the number of combinations for which the calculated distance metric value or Hamming distance (as the case may be) is smaller than a predetermined threshold. The processor 40 can thus determine the number of matching feature descriptors that have been found in the set of feature descriptors DSᵢ, which provides a measure of the degree of similarity (or closeness) between the set of feature descriptors derived from the image 22 and the set of feature descriptors DSᵢ. The higher the count, the more similar the set of feature descriptors DSᵢ is to the set of feature descriptors derived from the image 22, i.e. the higher the degree of similarity between the two, and the closer the two feature descriptors are in the multi-dimensional space in which they are defined.

In process S26 of Figure 5, the processor 40 determines, based on the degrees of similarity calculated in process S24 of Figure 5, whether the bird B can be identified as being one of the N different birds. To do this, the processor 40 may compare the number of matching feature descriptors found in each of the one or more of the sets of feature descriptors DS₁ to DS_{N} in the reference data 70 (i.e. the value of the count mentioned above) with a second predetermined threshold to determine whether there is a set of feature descriptors among the one or more of the sets of feature descriptors DS₁ to DS_{N} in the reference data 70 which can be considered to be derived from images of the same bird's foot/feet as the image 22. Such a set of feature descriptors would yield a number of matching feature descriptors that equals or exceeds the second threshold. In case the processor 40 determines that here is a set of feature descriptors among the one or more of the sets of feature descriptors DS₁ to DS_{N} in the reference data 70 which yields a number of matching feature descriptors that equals or exceeds the second threshold, the processor 40 determines that the bird B can be identified as being one of the plurality, N, of different birds. On the other hand, in case none of the one or more of the sets of feature descriptors DS₁ to DS_{N} in the reference data 70 is determined to have a number of matching feature descriptors which equals or exceeds the second threshold, the processor 40 determines that none of the one or more of the sets of feature descriptors DS₁ to DS_{N} in the reference data 70 can be considered to be derived from images of the same bird's foot/feet as the image 22, and that the bird B therefore cannot be identified.

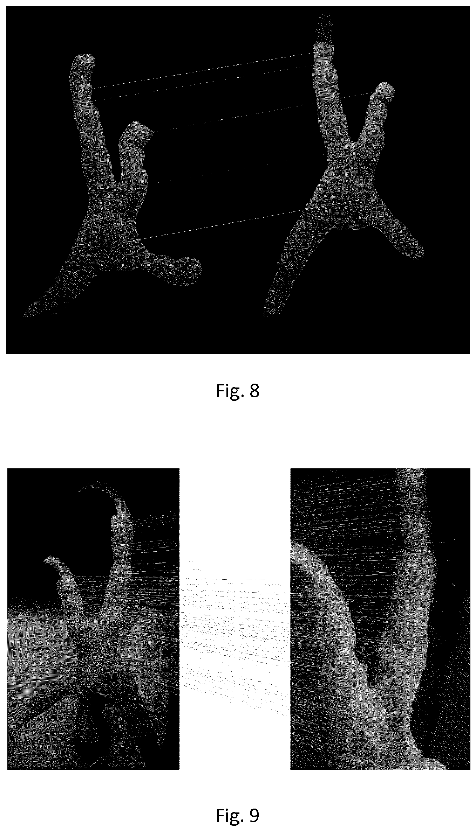

In Figure 8, a segmented version of the image of the right foot of the bird of Figure 6A, which has been obtained using the mask of Figure 6B, is shown on the right-hand side, and a segmented version of different image of the right foot of the same bird is shown for comparison on the left-hand side in Figure 8. Figure 8 also shows lines connecting key-points in the left-hand image to key-points in the right-hand image that correspond to feature descriptors in the two images which have been found to match. For clarity, only some of the matching feature key-points are illustrated in Figure 8. Where the set of feature descriptors based on image 22 is found to match one or more of the sets of feature descriptors DS₁ to DS_{N} in the reference data 70 that are based on images of the same bird, the number of matching feature descriptors (or matching feature key-points) will typically be large, as illustrated in Figure 9. It is noted that different images of the same foot of a bird were found to reliably yield matching sets of feature key-points independently of image size, translation, rotation, and scaling, making the techniques herein robust and therefore well-suited to real-life applications.

Although there are alternatives to the brute-force approach to determining whether the bird B can be identified described above, such as tree-searching FLANN-based methods, these were found to perform less reliably, despite delivering results faster and with less computing power. The inventors have found that the process of determining whether the bird B can be identified using the reference data 70 may instead be made faster and less intensive on computing resources by limiting the sets of feature descriptors in the reference data 70 that are processed in process S24 of Figure 5 to only those of the sets of feature descriptors DS₁ to DS_{N} that could be relevant for the bird B. This may be done in several different ways, as described in the following.

The reference data 70 may, as in the present example embodiment, further comprise, for each bird of the plurality of different birds, a respective indication of one or more attributes relating to the bird B. Figure 10 illustrates some examples of attributes and their respective indications for the different birds in the present example embodiment. As shown in Figure 10, the attributes of a bird include its species 73 (e.g. "European robin", "Eurasian Bullfinch", etc.), sex 74 ("male" or "female"), age 75 (e.g. "juvenile" or "adult"), and (at 76) whether the feature descriptor derived from the at least one image of an underside region of the foot of the bird relates to a left foot of the bird or a right foot of the bird ("left" or "right"). The reference data 70 need not include indications of all of these attributes, and one or more of these attributes may be omitted in other example embodiments, while one or more other attributes may be included.

Where, as in the example of Figure 4, the image 22 comprises an image portion IP_{FTHR} which shows a feathered portion P of the bird B at the bird station 10-1, the processor 40 may process the image portion IP_{FTHR} to obtain an indication of at least one attribute of the one or more attributes 73 to 76 which relates to the bird B at the bird station 10-1, and identify a subset of the reference data 70 using the obtained indication. These operations may be performed before process S24 in Figure 5, and before, concurrently with, or after process S22.

As an example, the processor 40 may use well-known classification techniques based on machine learning to identify the species of the bird B in the image 22 from its plumage. The processor 40 may use any known classifier, which has been trained using a set of training images of different species that have been acquired using imaging set-ups which are the same as (or similar to) that used to acquire image 22 and, as such, capture images of birds from a similar perspective and scale as image 22. The processor 40 may additionally or alternatively identify whether the bird B is a juvenile or an adult in a similar way, as juvenile birds of many species have plumage which is different to that of adult specimens. Likewise, the processor 40 may identify whether the bird B is male or female, as female birds of many species have plumage which is different to that of male specimens.

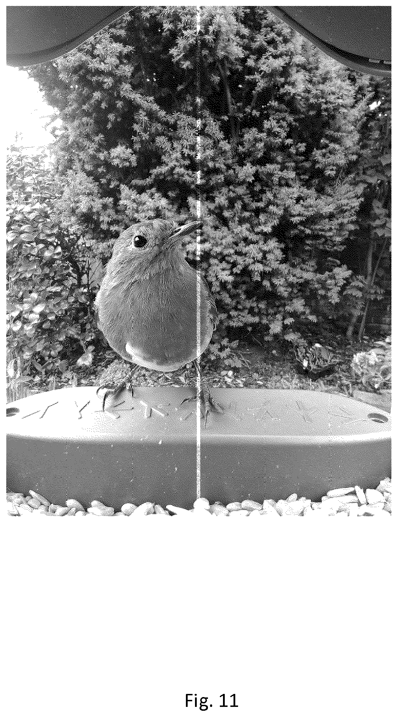

Particularly in example embodiments where the digital camera's optical axis lies in a substantially horizontal plane or is angled downward from the horizontal plane such that the camera can capture top-views of the bird's feet, and front-views, side-views, back-views of the bird B or an intermediate view between these views (depending on the bird's orientation) as it is visiting the bird station 10-1, as well as the second example embodiment and its variants described below (where a first camera is provided to image the underside of the bird's feet, and a second camera is used to image the feathered portion of the bird), the processor 40 may additionally or alternatively process the image portion showing the bird's plumage using the known classification techniques to determine an indication of an orientation of the bird B at the bird station 10-1, i.e. an indication of the direction (relative to the digital camera) which the body of the bird B was facing when the image 22 was captured. An example of an image processed in such example embodiments, which contains the image portion showing the bird's plumage, is shown in Figure 11. The processor 40 may then use the determined indication of the bird's orientation to determine whether each foot imaged in the image 22 is a right foot or a left foot of the bird.

For example, one of the well-known kinds of neural network classifier may be trained on images captured by the digital camera. In this case, one training sample could be an image of a bird showing its plumage (e.g. as shown in Figure 11), and the assigned label would indicate whether e.g. the left foot of the bird is left-most or right-most of the feet in the captured image, and/or front-most or back-most of the feet in the captured image. Thus, if the bird is positioned so that its breast is facing the digital camera, the position of its left foot would be further to the right in the image than its right foot so the corresponding label would be "right-most". The trained classifier could thus be used to determine from the image 22 whether a segmented part of the image 22 showing a foot of the bird relates to the bird's left foot or right foot. In the second example embodiment described below (where a first camera is provided to image the underside of the bird's feet, and a second camera is used to image the feathered portion of the bird), this determination may be made using the output of the trained classifier and the known (fixed) positional relationship between the two cameras.

Having knowledge of one or more of the species of the bird B whose foot F is imaged in the captured image 22, whether the bird B is a juvenile or an adult, whether the bird B is male or female, and whether a part of the image 22 showing the foot F of the bird B relates to the bird's left foot or right foot, the processor 40 is able to identify a subset of the reference data 70 having sets of feature descriptors that are limited to those derived from images of birds of the same species, age and sex as the bird B, and which relate to only left feet in case the set of feature descriptors generated in process S22 of Figure 5 (based on image 22) relate to the left foot of bird B, and which relate to only right feet in case the set of feature descriptors generated in process S22 of Figure 5 relate to the right foot of bird B. The processing of the image data to determine whether the bird B at the bird station 10-1 can be identified as being one of the plurality of different birds can then use feature descriptors that are limited to the feature descriptors in the identified subset of the reference data 70. In this way, the pool of the sets of feature descriptors in the reference data 70, whose similarity (i.e. closeness in the multi-dimensional space of the feature descriptors) to the set of feature descriptors derived from image 22 is to be calculated in process S24 of Figure 5, can be greatly reduced, thereby allowing process S24 to be performed more quickly and with greater computational efficiency. In addition, the incidence of false positives and false negatives may be reduced, thereby improving the accuracy of individual bird identification performed by the processor 40.

As shown in Figure 10, the reference data 70 may also include a respective indication of a date 77 on which the respective image of the foot of each bird of the plurality of different birds was captured, and the processor 40 may identify a subset of the reference data 70 using a date on which the image 22 was captured. The dates of image capture may be generated by a clock forming part of the imaging device used to acquire the images, and included in the data of the images, for example. The processing of the image data to determine whether the bird B at the bird station 10-1 can be identified as being one of the plurality of different birds may then use feature descriptors that are limited to the feature descriptors in the identified subset of the reference data 70. For example, the processor 40 may identify a subset of the reference data 70 wherein the sets of feature descriptors are derived from images of birds' feet captured within a predetermined period (e.g. a period longer than an expected lifetime of birds likely to visit the bird station, for example six or seven years) prior to the date of capture of image 22, thereby limiting the pool of sets of feature descriptors in the reference data 70, whose similarity to the set of feature descriptors derived from image 22 is to be calculated in process S24 of Figure 5, to those relating to birds that are likely to still be alive. In example embodiments like the present, where the reference data 70 is supplemented or built up over time with new records comprising new sets of feature descriptors and associated new sets of attribute indicators generated on the basis of images captured by the imaging device 20, as described in more detail below, the identification and use of a subset of the reference data 70 as described above may allow all of the accumulated reference data 70 to be stored for statistical purposes (which may be useful in the study of bird feeding patterns, for example) whilst allowing process S24 of Figure 5 to be performed in a fast and computationally efficient way. In cases where such historical data is not required, the processor 40 may purge records in the reference data 70 that are older than a predefined amount (e.g. six to seven years) from time to time, for example at regular intervals of one or more months.

The reference data 70 may, as in the present example embodiment, also include a respective indication of a geographical location 78 at which the respective image of the foot of each bird of the plurality of different birds was captured, and the processor 40 may identify a subset of the reference data 70 using an indication of a geographical location at which the image 22 was captured. The geographical location 78 may relate to a geographical region of a plurality of geographical regions into which the Earth's land surface (or part thereof) may be divided, for example using a grid of regularly spaced lines of longitude and latitude (or in any other way). The processing of the image data to determine whether the bird B at the bird station 10-1 can be identified as being one of the plurality of different birds may use feature descriptors that are limited to the feature descriptors in the identified subset of the reference data 70. By way of an example, where the reference data 70 is supplemented or built up over time with new records comprising new sets of feature descriptors and associated new sets of attribute indicators generated on the basis of images captured by the imaging devices 20 of the bird stations 10, as described in more detail below, the indication of the geographical location at which the image 22 was captured may be used to limit the pool of sets of feature descriptors in the reference data 70, whose similarity to the set of feature descriptors derived from image 22 is to be calculated in process S24 of Figure 5, to those derived from images captured within the same geographical region as image 22 (or within one or more neighbouring regions), for example. In this way, feature descriptors relating to birds residing in remote parts of the world to bird B visiting bird station 10-1, which are unlikely to visit bird station 10-1, can be excluded from the processing in S24 of Figure 5, thus allowing this process to be performed in a fast and computationally efficient way.

Some of the attributes in the reference data 70 may be used in combination to limit the pool of sets of feature descriptors in the reference data 70, whose similarity to the set of feature descriptors derived from image 22 is to be calculated in process S24 of Figure 5. For example, by determining species of the bird B, the processor 40 can also determine if species of the bird is migratory or not. If it is not, the processor 40 can also reduce the potential matching dataset to specimens that have been imaged within a particular distance from the bird station 10-1, which each bird station in the system 1 may make available to the data processing apparatus 30-1. Taking into consideration that some bird species migrate only in particular seasons of the year, the same approach can be taken also for species that are migratory, using the indications of the "Date" attribute.

By way of an example, if male Northern Cardinal visited the bird station 10-1, the processor 40 may separately extract feature descriptors from the image of the bird's left/right foot and compare these with sets of feature descriptors in the reference data 70 relating to the left/right feet (as the case may be) of male Northern Cardinals imaged within, e.g. 300 km of the bird station 10-1. Such use of attributes 74 and 76 to 78 would not only reduce the pool of potential matches but may also enable accurate matching to be performed even if one foot of the bird B is not imaged at the bird station 10-1. Also, even if one foot is not sufficiently in focus or the matching of feature vectors is not successful for one foot but is with the other, this could serve as additional false-positive or false-negative filter.

As noted above with in relation to Figure 3, in case the processor 40 determines in process S20 that the bird B can be identified as being one of the plurality of different birds, the processor 40 may update the set of feature descriptors in the reference data 70 for the one of the plurality of different birds to include at least one new feature descriptor which is derived from the image 22. On the other hand, in case the processor 40 determines in process S20 that the bird B cannot be identified as being one of the plurality of different birds, the processor 40 may update the reference data 70 to include at least one new feature descriptor, D_{N+1}, which is derived from image 22, and associated new bird identification information, ID_{N+1}, which indicates a newly assigned identity of the bird B. With currently available digital cameras, it is possible to acquire high-resolution images of a bird's feet at 15 Hz or above, which means that several images of the feet of a visiting bird can be acquired during each visit. Several feature descriptors from the same specimen can therefore be added to the reference data 70 with every visit, thereby increasing the probability of a positive match every next time the same specimen visits the bird station 10-1. This is because the updating of the reference data 70 described herein allows the feature descriptors from images captured during visits to be compared to a growing set of feature descriptors in the reference data 70 that corresponding to the same specimen. Whenever a match is found, the feature descriptors acquired from the image captured during the visit can be added to existing dataset for the same specimen again, which may improve the chances of match for every next visit (i.e. with every repeated visit of the same bird, the processor's ability to identify that bird improves.

In addition or as an alternative to the measures for making the process of determining whether the bird B can be identified faster and/or more computationally efficient described above, the similar advantages may be achieved by reference data 70 having, in place of a plurality of sets of feature descriptors derived from a corresponding plurality of different images of a foot of a bird of the plurality of different birds, a single set of mean feature descriptors for the bird, wherein each mean feature descriptor is a mean of corresponding feature descriptors in the sets of feature descriptors, where the corresponding feature descriptors correspond to a common extracted key-point. Where each feature descriptor of the plurality of sets of feature descriptors is expressed as a respective feature vector, each mean feature descriptor in the single set of mean feature descriptors can be expressed as a vector which is a mean of the feature vectors that represent the corresponding feature descriptors. Here, the mean of a set of vectors is understood to be calculated component-wise, such that component mᵢ of a mean vector m = (m₁, m₂, m₃, ...mₙ), which is a mean of vectors *v₁ =* (a₁, a₂, a₃, ...aₙ) and *v₂ =* (b₁, b₂, b₃, ...bₙ), is (aᵢ + bᵢ)/2, for example. In the single set of mean feature descriptors for the bird, each mean feature descriptor may alternatively be a weighted mean of corresponding feature descriptors in the sets of feature descriptors (where the corresponding feature descriptors again correspond to a common extracted key-point). In this alternative, more weight may be given to feature descriptors that are derived from images showing a complete foot than those derived from partial images, for example. The weighting may be derived from the size (i.e. total area) of a segmented image, and may also depending on a quality of the image, such as the degree of focus or the amount of blurring present, for example. In either case, storing the respective single set of mean feature descriptors, in place of a respective plurality of sets of feature descriptors, in association the respective bird identification information for each of the birds in the reference data 70, can reduce the amount of data which the memory 50-1 is required to store, and can furthermore reduce the amount of data which the processor 40 is required to process in process S20 of Figure 3. In example embodiments where the reference data 70 is updated based on newly-acquired feature descriptors, as described above, the single set of mean feature descriptors for a bird in the reference data 70, which has been identified as being the same bird as imaged in the image 22, may be updated by updating at least some of the mean feature descriptors in the single set using the corresponding feature descriptors derived from the image 22 and the respective numbers of feature descriptors that have been used to calculate the at least some of the mean feature descriptors in the single set.

### [Second Example Embodiment]

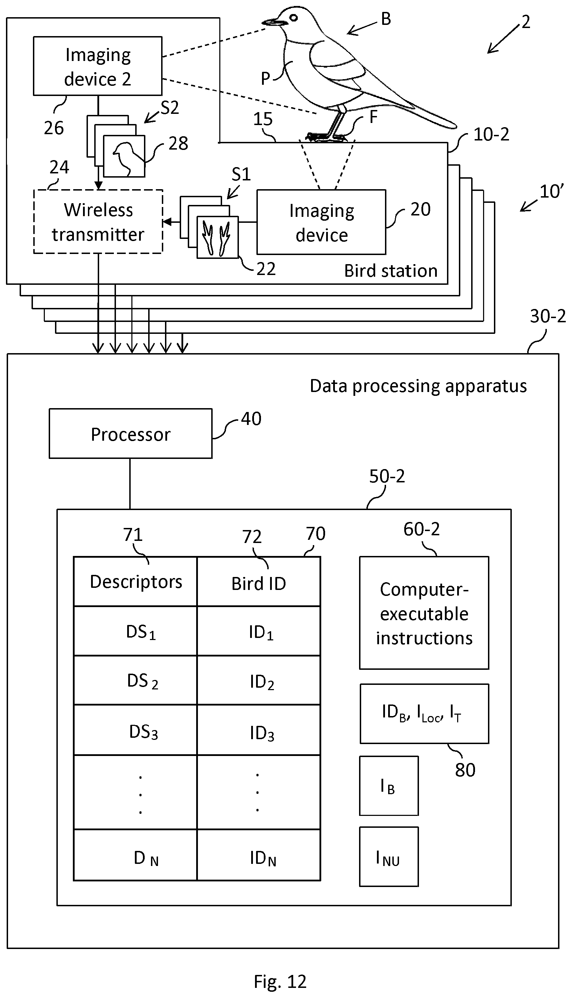

Figure 12 is a schematic illustration of a system 2 for identifying and tracking movements of an individual bird across a geographical region according to a second example embodiment herein. The system 2 may likewise allow an individual bird to be identified and tracked non-invasively such that it is not required to depart from its natural behaviour, and in a fully automated and unsupervised way.

The system 2 comprises a plurality of bird stations 10', which are distributed across the whole world, one or more continents, one or more countries or any other geographical region(s). In the following, a single bird station, as shown at 10-2 in Figure 12, is described, and the description of this bird station applies to the other bird stations 10' in the system 2, with any mentioned modifications and variations being applicable to each bird station regardless of the configurations of the other bird stations, unless stated or required otherwise.

The bird station 10-2 includes a first imaging device 20 and an optional wireless transmitter 24 that identical to like-numbered components of the bird station 10-1 of the first example embodiment. The imaging device 20 is arranged to generate image data by capturing a first set of images S1 of at least part of the underside region of the foot F of the bird B, where the first set of images S1 includes the image 22.

The bird station 10-2 also includes a second imaging device 26, which is arranged to capture a second set of images S2, where each image of the second set of images S2 shows a feathered portion P of the bird B at the bird station 10-2. The second imaging device 26 may, as in the present example embodiment, be provided in the form of a digital camera which is arranged to capture images of the bird B while is stands or sits on the surface 15 of the bird station 10-2, for example an Omnivision^{™} OV5693 camera, which is a 1/4-inch, 5-megapixel image sensor, delivering DSC-quality imaging and low-light performance, as well as full 1080p high-definition video recording at 30 frames per second (fps). The digital camera may form part of a detachable electronic control module as described in UK Patent Application No. 2203727.9 (published as GB 26160-181 A), the contents of which are incorporated herein by reference in their entirety. The detachable electronic control module may comprise an electronic control module having an image processing chipset for processing image data obtained from the camera. The image processing chipset may support an Internet Protocol (IP) Camera system on a chip (SoC) designed for low power consumption, high image quality, and Edge Al computing. Such an image processing chipset may be capable of performing intelligent video analytics without additional cloud server computing power and support versatile Convolutional Neural Network models to detect various pre-defined objects. The image processing chipset may be, for example, a Realtek^{™} RTS3916E chipset or any other suitable chipset known to the skilled person.

The second imaging device 26 is arranged to capture the second set of images S2 while the first imaging device 20 is capturing the first set of images S1. The second imaging device 26 may, for example, be triggered by the detection of the bird B on the surface 15 of the bird station 10-2 by the sensor described above to start capturing the second set of images S2. The first imaging device 20 may likewise be triggered by the detection of the bird B on the surface 15 by the sensor to start capturing the first set of images S1, or by a trigger signal transmitted to the first imaging device 20 by the second imaging device 26 (via a Bluetooth^{®} or wired connection between the two imaging devices), in response to the second imaging device 26 having been triggered to capture the second set of images S2. Each image captured by the first imaging device 20 or the second imaging device 26 (as the case may be) may be provided with a timestamp indicating the time at which the image was captured.

As the first set of images S1 and the second set of images S2 are acquired concurrently in the present example embodiment, it may be advantageous to configure the camera of the first imaging device 20 to not have an internal IR filter covering the digital sensor, as mentioned above, and to provide IR illumination sources to illuminate at least part of the underside region of the foot F of the bird B, and preferably also provide a filter that allows IR light to pass through the surface 15 whilst blocking higher frequency spectral components. These features may reduce or eliminate any artefacts in the second set of images S2 that may be caused by the illumination of the underside of the bird's feet that is used to acquire the first set of images S1.

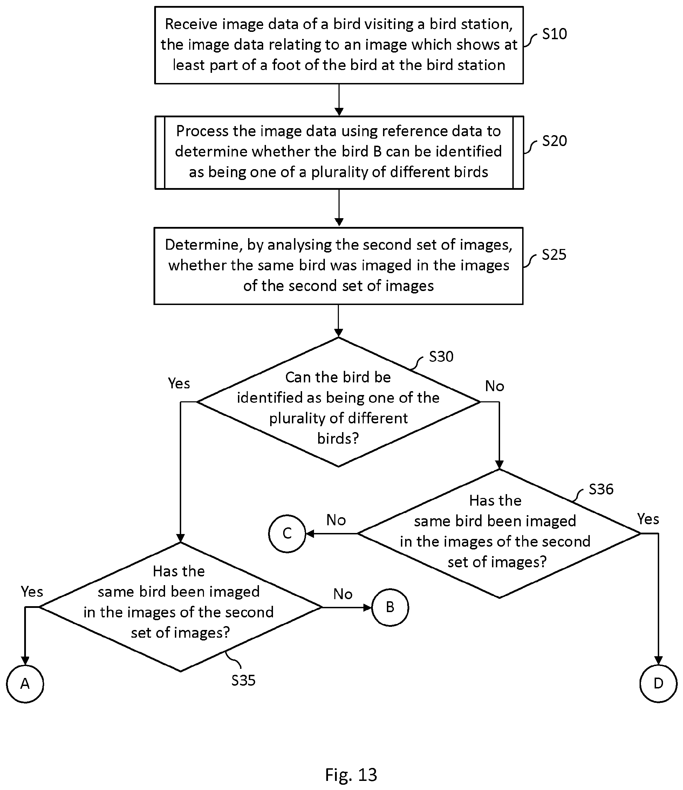

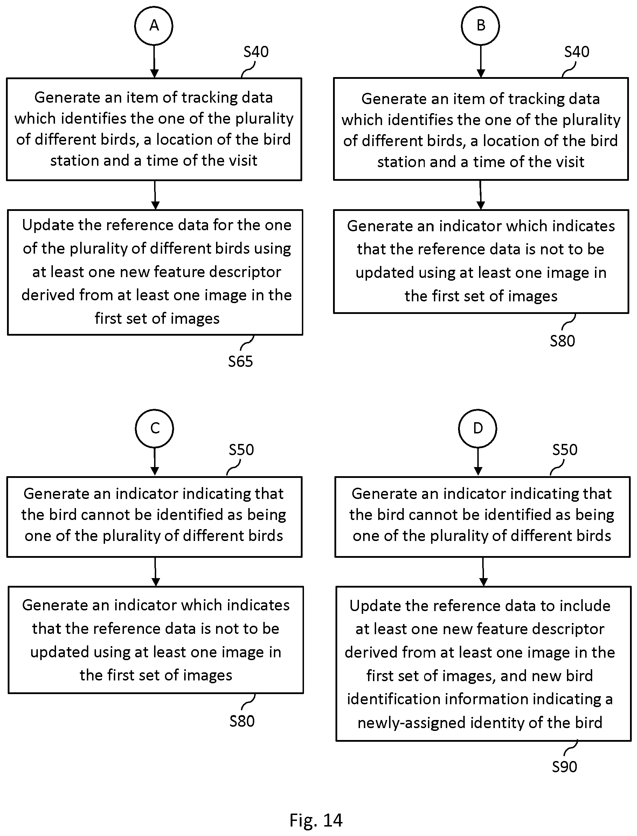

The system 2 of the present example embodiment also includes a data processing apparatus 30-2, which can perform the same operations as the data processing apparatus 30-1 of the first example embodiment (including the method of attempting to identify an individual bird and generate an item of tracking data 80 based on image data of the bird described above with reference to Figures 3 to 11) and, in addition, the further processes that will now be described with reference to Figures 13 and 14.

Referring to Figure 13, the processor 40 performs processes S10 and S20 as described above in the context of the first example embodiment, which may be implemented, varied or modified in the various ways described above. The processor 40 thus determines whether the bird B imaged in one or more of the images (e.g. image 22) in the first set of images S1 can be identified as being one of the birds in the reference data 70.

In process S25 of Figure 13, the processor 40 determines, by analysing the second set of images S2 captured by the second imaging device 26, whether the same bird (and only that bird) was imaged in the images of the second set of images S2. Known video tracking techniques may be used for this purpose. By way of an example, in some of these techniques, the bird (as a target object) in the first image (frame) of the sequence of images S2 may be defined by using an appropriate object detector to automatically draw a bounding box around it. The tracking algorithm functions to predict the position of the bird in the remaining images of the sequence S2 and at the same time identify instances of the bird in these images. Appearance modelling may then be used to model the bird's appearance so that the tracking algorithm is able to keep track of the bird despite (typically small) changes in lighting conditions, perspective, and the like. Once the bird has been defined and its appearance modelled, motion estimation is performed using predictors such as Kalman filters or particle filters, for example. With the likely location of the bird in a frame having thus been predicted, its exact location in the frame is found using a greedy search or the like.

In case the processor 40 determines that the bird B can be identified as being one of the plurality of different birds ("Yes" at S30 in Figure 13), and that the same bird (and only that bird) was imaged in the images of the second set of images S2 ("Yes" at S35 in Figure 13), the processor 40 performs process S40 as described above with reference to Figure 3, and updates the reference data 70 for the one of the plurality of different birds in process S65 in Figure 14, using at least one new feature descriptor D_{new} which is derived from at least one image in the first set of images S1. For example, as shown in Figure 10, in case the bird B is identified as being the bird with identifier "ID₃" in the reference data 70, the set of feature descriptors DS₃ for that bird may be supplemented with a new feature descriptor, D_{new}, which is derived from one of the images in the first set of images S1. Alternatively, in example embodiments where a respective set of mean feature descriptors is provided in the reference data 70 for each of the plurality of different birds, as described above, the single set of mean feature descriptors for a bird in the reference data 70, which has been identified as being the same bird as imaged in the first set of images S1 (e.g. in image 22 of the set), may be updated by updating at least some of the mean feature descriptors in the single set using the corresponding feature descriptors derived from the one or more of the images in the set S1 (e.g. image 22) and the respective numbers of feature descriptors that have been used to calculate the at least some of the mean feature descriptors in the single set.

In a variant of the present example embodiment, in case the processor 40 determines that the bird B can be identified as being one of the plurality of different birds ("Yes" at S30 in Figure 13), the processor 4 may proceed to processes S40 and S65 irrespective of whether the same bird has been imaged in the images of the second set of images S2. The process may thus proceed unconditionally to branch "A" after a positive determination at S30 in Figure 13.

In case the processor 40 determines that the bird B cannot be identified as being one of the plurality of different birds ("No" at S30 in Figure 13), and that the same bird was imaged in the images of the second set of images S2, the processor 40 performs process S50 as described above with reference to Figure 3, and updates the reference data 70 in process S90 in Figure 14 to include at least one new feature descriptor D_{N+1} which is derived from at least one image in the first set of images S1 in the manner described above, as well as associated new bird identification information ID_{N+1} which indicates a newly-assigned identity of the bird B.

In case the processor 40 determines that the same bird was not imaged in the images of the second set of images S2 ("No" at S35 or S36 in Figure 13), the processor 40 generates an indicator I_{NU} which indicates that the reference data 70 is not to be updated using at least one image in the first set of images S1. In this case, the processor 40 also performs process S40 or process S50, depending on the determination in process S30 of Figure 13. The indicator I_{NU} may be stored in the memory 50-2, for example in the working memory 130 in the hardware implementation of the data processing apparatus 30-2 which is shown at 100 in Figure 2.

It is noted that the order in which many of the processes in Figures 13 and 14 are performed may be changed. For example, process S25 may alternatively be performed before or in parallel with process S10 and/or process S20. Furthermore, the order in which the processes in each of the four branches A to D of the flow diagram of Figure 13 are performed may be reversed (e.g. process S65 may be performed before process S40 in branch "A" shown in Figure 14).

Updating the reference data 70 to include a new record, comprising one or more new sets of feature descriptors and associated new indicators of one or more of the attributes, and an associated a newly-assigned identity of a bird which is not among the plurality of different birds in the reference data 70, on the basis of a set of images of the bird's foot/feet, rather than a single image (as in the case of the first example embodiment) may provide a better "seed" set of feature descriptors that allows the that bird to be identified more reliably in future visits to the bird station 10-2.

In the present example embodiment, the processor 40 may determine whether the bird B at the bird station 10-2 can be identified as being one of the plurality of different birds using a subset of feature descriptors in the reference data 70, in the same manner as in the first example embodiment, although the image portion IP_{FTHR} showing a feathered portion P of the bird B is, in this case, obtained from a second image 28 among the second set of images S2 captured by the second imaging device 26.

### [Modifications and Variations]

In the example embodiments described above, the data processing apparatuses 30-1 and 30-1 are arranged to receive image data in the form of digital images captured by the imaging device 20 (as well as the second imaging device 26 in the second example embodiment), with all subsequent processing of the images being performed by the remote data processing apparatuses 30-1 and 30-1. It should be noted, however, that some of the above-described functionality of the data processing apparatus 30-1 or 30-2 may be distributed between data processing hardware of the bird station 10-1 or 10-2, and the data processing apparatus 30-1 or 30-2. For example, the data processing hardware of the bird station 10-1 or 10-2 (for example, that provided in the detachable electronic control module as described in UK Patent Application No. 2203727.9 (published as GB 26160-181 A), which also includes the imaging device 20) may perform the image segmentation (and, in some cases, also the feature extraction and description) to generate the image data that is communicated to the remote data processing apparatus 30-1 or 30-2, with the remaining parts of the processes described above being performed on this image data by the remote data processing apparatus 30-1 or 30-2.

Although a system for identifying and tracking an individual bird according to some example embodiments comprises a plurality of bird stations wherein each bird station is configured in accordance with the description of bird station 10-1 or one of its variants set out above, or in accordance with the description of bird station 10-2 or one of its variants set out above, a system for identifying an individual bird according to other example embodiments may have a combination of one or more bird stations that are configured in accordance with the description of bird station 10-1 or one of its variants set out above, and one or more other bird stations that are configured in accordance with the description of bird station 10-2 or one of its variants set out above.

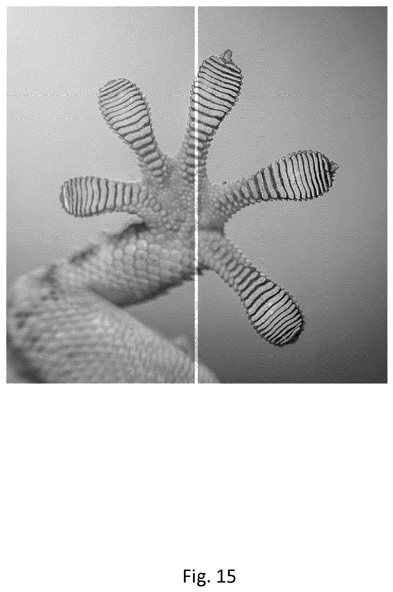

Furthermore, the techniques for identifying and tracking individual birds based on images of their feet described herein may be applied to identify and track individual specimens of other animal species. For example, at least some species of lizard have feet that are rich in features unique to an individual lizard, as shown in the image of an underside of a foot of a lizard in Figure 15. The same can be said for the patterns of scales on the heads of snakes. As further examples, primates (e.g. gorillas and chimpanzees) and some mammals that climb, such as monkeys and koalas, have a unique palmprints and/or fingerprints which may likewise allow individuals to be identified and tracked using the techniques described herein. At least some felines (e.g. domestic cats), canids (e.g. dogs, foxes and wolves), bovids (e.g. cows, buffalo, bison, antelopes, sheep and goats) and cervids (e.g. deer) provide further examples, as their nose prints have been reported to be unique and stable over time and, as such, would allow individual specimens to be identified and tracked using the techniques described herein. The techniques for individual specimen identification and tracking described herein may also be applied to identify and track individual tigers and zebras, which have unique stripe patterns, and individual leopards, cheetahs and jaguars, which have unique spot patterns.

In accordance with the teachings herein, a system for identifying and tracking an individual animal of one or more of the different kinds set out above may be provided. The system comprises a plurality of animal stations, wherein each animal station provides at least one of food, drink, bathing, nesting and shelter for such animals, and comprises a respective imaging device arranged to generate respective image data by capturing a respective image which shows at least part of an animal of the one or more of the different kinds set out above (which part may be a foot of a lizard, a head of a snake or other reptile, an underside of a finger or palm of a primate or mammal that climbs (e.g. monkey or koala), or the nose of a feline, canid, bovid or cervid, for example) which is visiting the animal station. The system further comprises a data processing apparatus having at least one processor, and at least one memory storing computer-executable instructions that, when executed by the at least one processor, cause the at least one processor to generate animal tracking data for tracking a movement of an individual animal between at least some of the animal stations by: processing the respective image data from each animal station of the plurality of animal stations using reference data which comprises, for each animal of a plurality of different animals (of the one or more of the different kinds set out above), a respective set of feature descriptors derived from at least one image of a part of the animal (which part may be a foot of a lizard, a head of a snake or other reptile, an underside of a finger or palm of a primate or mammal that climbs (e.g. monkey or koala), or the nose of a feline, canid, bovid or cervid, for example), and respective animal identification information which identifies the individual animal, to determine whether the animal visiting the animal station can be identified as being one of the plurality of different animals; and performing, for each animal station of the plurality of animal stations, processes of: in case it is determined that the animal visiting the animal station can be identified as being one of the plurality of different animals, generating a respective item of the tracking data, which item comprises (i) respective identification information which identifies the one of the plurality of different animals, (ii) respective location information indicative of a geographical location of the animal station, and (iii) a respective indication of a time at which the animal visited the animal station; and in case it is determined that the animal visiting the animal station cannot be identified as being one of the plurality of different animals, generating an indicator indicating that the animal cannot be identified as being one of the plurality of different animals.

In accordance with the teachings herein, there may be provided a computer-implemented method of generating animal tracking data for tracking a movement of an individual animal of one or more of the different kinds set out above in a region comprising a plurality of animal stations, wherein each animal station provides at least one of food, drink, bathing, nesting and shelter for such animals, and comprises a respective imaging device arranged to generate respective image data by capturing a respective image which shows at least part of an animal of the one or more of the different kinds set out above (which part may be a foot of a lizard, a head of a snake or other reptile, an underside of a finger or palm of a primate or mammal that climbs (e.g. monkey or koala), or the nose of a feline, canid, bovid or cervid, for example) which is visiting the animal station. The method comprises processing the respective image data from each animal station of the plurality of animal stations using reference data which comprises, for each animal of a plurality of different animals (of the one or more of the different kinds set out above), a respective set of feature descriptors derived from at least one image of a part of the animal (which part may be a foot of a lizard, a head of a snake or other reptile, an underside of a finger or palm of a primate or mammal that climbs (e.g. monkey or koala), or the nose of a feline, canid, bovid or cervid, for example), and respective animal identification information which identifies the individual animal, to determine whether the animal visiting the animal station can be identified as being one of the plurality of different animals. The method further comprises performing, for each animal station of the plurality of animal stations, processes of: in case it is determined that the animal visiting the animal station can be identified as being one of the plurality of different animals, generating a respective item of the tracking data, which item comprises (i) respective identification information which identifies the one of the plurality of different animals, (ii) respective location information indicative of a geographical location of the animal station, and (iii) a respective indication of a time at which the animal visited the animal station; and in case it is determined that the animal visiting the animal station cannot be identified as being one of the plurality of different animals, generating an indicator indicating that the animal cannot be identified as being one of the plurality of different animals.

Such system and computer-implemented method may have features as set out in one or more of the example embodiments or variants thereof set out in the above 'Summary' section of this document but with references to "the bird" being replaced with "the animal", "a foot of the bird" being replaced with "a part of the animal" (which part may be a foot of a lizard, a head of a snake or other reptile, an underside of a finger or palm of a primate or mammal that climbs (e.g. monkey or koala), or the nose of a feline, canid, bovid or cervid, for example), "bird station" being replaced with "animal station", "feathered portion of a bird" with "furry portion of the animal" (in case the animal to be identified is one of the mentioned kinds, excluding reptiles) or "scaly portion of the reptile" (in case the animal to be identified is a reptile, e.g. a lizard or snake), etc.

In the foregoing description, example aspects are described with reference to several example embodiments. Accordingly, the specification should be regarded as illustrative, rather than restrictive. Similarly, the figures illustrated in the drawings, which highlight the functionality and advantages of the example embodiments, are presented for example purposes only. The architecture of the example embodiments is sufficiently flexible and configurable, such that it may be utilized in ways other than those shown in the accompanying figures.

Some aspects of the examples presented herein, such as the processing methods described with reference to Figures 3, 5, 13 and 114 may be provided as a computer program, or software, such as one or more programs having instructions or sequences of instructions, included or stored in an article of manufacture such as a machine-accessible or machine-readable medium, an instruction store, or computer-readable storage device, each of which can be non-transitory, in one example embodiment. The program or instructions on the non-transitory machine-accessible medium, machine-readable medium, instruction store, or computer-readable storage device, may be used to program a computer system or other electronic device. The machine- or computer-readable medium, instruction store, and storage device may include, but are not limited to, floppy diskettes, optical disks, and magneto-optical disks or other types of media/machine-readable medium/instruction store/storage device suitable for storing or transmitting electronic instructions. The techniques described herein are not limited to any particular software configuration. They may find applicability in any computing or processing environment. The terms "computer-readable", "machine-accessible medium", "machine-readable medium", "instruction store", and "computer-readable storage device" used herein shall include any medium that is capable of storing, encoding, or transmitting instructions or a sequence of instructions for execution by the machine, computer, or computer processor and that causes the machine/computer/computer processor to perform any one of the methods described herein. Furthermore, it is common in the art to speak of software, in one form or another (e.g., program, procedure, process, application, module, unit, logic, and so on), as taking an action or causing a result. Such expressions are merely a shorthand way of stating that the execution of the software by a processing system causes the processor to perform an action to produce a result.

Some or all of the functionality of the data processing apparatus 30-1 or 30-2 may also be implemented by the preparation of application-specific integrated circuits, field-programmable gate arrays, or by interconnecting an appropriate network of conventional component circuits.

A computer program product may be provided in the form of a storage medium or media, instruction store(s), or storage device(s), having instructions stored thereon or therein which can be used to control, or cause, a computer or computer processor to perform any of the procedures of the example embodiments described herein. The storage medium/instruction store/storage device may include, by example and without limitation, an optical disc, a ROM, a RAM, an EPROM, an EEPROM, a DRAM, a VRAM, a flash memory, a flash card, a magnetic card, an optical card, nanosystems, a molecular memory integrated circuit, a RAID, remote data storage/archive/warehousing, and/or any other type of device suitable for storing instructions and/or data.

Stored on any one of the computer-readable medium or media, instruction store(s), or storage device(s), some implementations include software for controlling both the hardware of the system and for enabling the system or microprocessor to interact with a human user or other mechanism utilizing the results of the example embodiments described herein. Such software may include without limitation device drivers, operating systems, and user applications. Ultimately, such computer-readable media or storage device(s) further include software for performing example aspects of the invention, as described above.

Included in the programming and/or software of the system are software modules for implementing the procedures described herein. In some example embodiments herein, a module includes software, although in other example embodiments herein, a module includes hardware, or a combination of hardware and software.

While various example embodiments of the present invention have been described above, it should be understood that they have been presented by way of example, and not limitation. It will be apparent to persons skilled in the relevant art(s) that various changes in form and detail can be made therein. Thus, the present invention should not be limited by any of the above-described example embodiments, but should be defined only in accordance with the following claims.

While this specification contains many specific embodiment details, these should not be construed as limitations on the scope of any inventions or of what may be claimed, but rather as descriptions of features specific to particular embodiments described herein. Certain features that are described in this specification in the context of separate embodiments can also be implemented in combination in a single embodiment. Conversely, various features that are described in the context of a single embodiment can also be implemented in multiple embodiments separately or in any suitable subcombination.

In certain circumstances, multitasking and parallel processing may be advantageous. For example, the calculation of the degrees of similarity between each feature descriptor of the image 22 the descriptors in each of the sets of descriptors in the reference data 70 may be performed in parallel, to speed up the computations. Moreover, the separation of various components in the embodiments described above should not be understood as requiring such separation in all embodiments, and it should be understood that the described program components and systems can generally be integrated together in a single software product or packaged into multiple software products.

## Claims

1. A system (1; 2) for identifying and tracking an individual bird, comprising:
a plurality of bird stations (10; 10'), wherein each bird station (10-1; 10-2) provides at least one of food, drink, bathing, nesting and shelter for birds, and comprises a respective imaging device (20) arranged to generate respective image data by capturing a respective image (22) which shows at least part of a foot (F) of a bird (B) visiting the bird station (10-1; 10-2); and
a data processing apparatus (30-1; 30-2) comprising at least one processor (40), and at least one memory (50-1; 50-2) storing computer-executable instructions (60-1; 60-2) that, when executed by the at least one processor (40), cause the at least one processor (40) to generate bird tracking data for tracking a movement of an individual bird between at least some of the bird stations (10; 10') by:
processing the respective image data from each bird station (10-1; 10-2) of the plurality of bird stations (10; 10') using reference data (70) which comprises, for each bird of a plurality of different birds, a respective set of feature descriptors (DS₁ to DS_{N}) derived from at least one image of a foot of the bird, and respective bird identification information (ID₁ to ID_{N}) which identifies the bird, to determine whether the bird (B) visiting the bird station can be identified as being one of the plurality of different birds; and
performing, for each bird station (10-1; 10-2) of the plurality of bird stations (10; 10'), processes of:
in case it is determined that the bird (B) visiting the bird station (10-1; 10-2) can be identified as being one of the plurality of different birds, generating a respective item of the tracking data, which item comprises:
respective identification information (ID_{B}) which identifies the one of the plurality of different birds;
respective location information indicative of a geographical location of the bird station (10-1; 10-2); and
a respective indication of a time at which the bird (B) visited the bird station (10-1; 10-2); and
in case it is determined that the bird (B) visiting the bird station (10-1; 10-2) cannot be identified as being one of the plurality of different birds, generating an indicator (I_{B}) indicating that the bird (B) cannot be identified as being one of the plurality of different birds.

2. The system (1; 2) of Claim 1, wherein the computer-executable instructions (60-1; 60-2), when executed by the at least one processor (40), cause the at least one processor (40) to process the respective image data from each bird station (10-1; 10-2) of the plurality of bird stations (10; 10') to determine whether the bird (B) visiting the bird station (10-1; 10-2) can be identified as being one of the plurality of different birds by:
processing the image data to generate a set of feature descriptors of the respective image (22);
calculating a respective degree of similarity between the generated set of feature descriptors and each of one or more of the sets of feature descriptors (DS₁ to DS_{N}) in the reference data (70); and
determining, based on the calculated degrees of similarity, whether the bird (B) visiting the bird station (10-1; 10-2) can be identified as being one of the plurality of different birds.

3. The system (1; 2) of Claim 2, wherein the computer-executable instructions (60-1; 60-2), when executed by the at least one processor (40), cause the at least one processor (40) to process the respective image data from each bird station (10-1; 10-2) of the plurality of bird stations (10; 10') to generate the respective set of feature descriptors by segmenting the respective image (22) to isolate a part of the image representing an image of the at least part of the foot (F) of the bird (B) at the bird station (10-1; 10-2) from a remainder of the image (22), and processing the isolated part of the image to generate the respective set of feature descriptors of the image (22).

4. The system (1; 2) of any of Claims 1 to 3, wherein the computer-executable instructions (60-1), when executed by the at least one processor (40), further cause the at least one processor (40) to:
in case it is determined that the bird (B) visiting first a bird station (10-1; 10-2) of the plurality of bird stations (10; 10') can be identified as being one of the plurality of different birds, update the set of feature descriptors in the reference data (70) for the one of the plurality of different birds using at least one new feature descriptor (D_{new}) which is derived from the image (22) captured by the imaging device (20) of the first bird station (10-1; 10-2); and
in case it is determined that the bird (B) visiting a first bird station (10-1; 10-2) of the plurality of bird stations (10; 10') cannot be identified as being one of the plurality of different birds, update the reference data (70) to include at least one new feature descriptor (D_{N+1}) which is derived from image (22) captured by the imaging device (20) of the first bird station (10-1; 10-2), and associated new bird identification information (ID_{N+1}) which indicates a newly assigned identity of the bird (B) visiting the first bird station (10-1; 10-2).

5. The system (2) of any of Claims 1 to 3, wherein
the imaging device (20) of a first bird station (10-2) of the plurality of bird stations (10')is arranged to generate the image data by capturing a first set of images (S1) of at least part of the foot (F) of the bird (B) visiting the first bird station (10-2), which first set of images (S1) includes the image (22) captured by the imaging device (20) of the first bird station (10-2),
the first bird station (10-2) further comprises a second imaging device (26) arranged to capture a second set of images (S2), each image of the second set of images (S2) showing a feathered portion (P) of a bird (B) at the first bird station (10-2), the second imaging device (26) being arranged to capture the second set of images (S2) while the imaging device (20) of the first bird station (10-2) is capturing the first set of images (S1), and
the computer-executable instructions (60-2), when executed by the at least one processor (40), further cause the at least one processor (40) to:
determine, by analysing the second set of images (S2), whether the same bird was imaged in the images of the second set of images (S2);
in case it is determined that the same bird was imaged in the images of the second set of images (S2), and that the bird (B) visiting the first bird station (10-2) can be identified as being one of the plurality of different birds, update the reference data (70) for the one of the plurality of different birds using at least one new feature descriptor (D_{new}) which is derived from at least one image in the first set of images (S1);
in case it is determined that the same bird was imaged in the images of the second set of images (S2), and that the bird (B) visiting the first bird station (10-2) cannot be identified as being one of the plurality of different birds, update the reference data (70) to include at least one new feature descriptor (D_{N+1}) which is derived from at least one image in the first set of images (S1), and new bird identification information (ID_{N+1}) which indicates a newly assigned identity of the bird (B) visiting the first bird station (10-2); and
in case it is determined that the same bird was not imaged in the images of the second set of images (S2), generate an indicator (I_{NU}) which indicates that the reference data (70) is not to be updated using at least one image in the first set of images (S1).

6. The system (2) of any preceding claim, wherein
the reference data (70) further comprises, for each bird of the plurality of different birds, a respective indication of one or more attributes (73 to 76) relating to the bird (B),
a first bird station (10-2) of the plurality of bird stations (10') further comprises a second imaging device (26) arranged to capture a second image (28) of the bird (B) at the first bird station (10-2), wherein the second image (28) comprises an image portion (IP_{FTHR}) which shows a feathered portion (P) of the bird (B) at the first bird station (10-2), and
the computer-executable instructions (60-2), when executed by the at least one processor (40), further cause the at least one processor (40) to:
process the image portion (IP_{FTHR}) to obtain an indication of at least one attribute of the one or more attributes (73 to 76) which relates to the bird (B) at the first bird station (10-2); and
identify a subset of the reference data (70) using the obtained indication, and
the processing of the image data from the first bird station (10-2) to determine whether the bird (B) at the first bird station (10-2) can be identified as being one of the plurality of different birds uses feature descriptors that are limited to the feature descriptors in the identified subset of the reference data (70).

7. The system (1) of any of Claims 1 to 5, wherein
the reference data (70) further comprises, for each bird of the plurality of different birds, a respective indication of one or more attributes (73 to 76) relating to the bird (B), and
the image (22) captured by the imaging device (20) of a first bird station (10-1) of the plurality of bird stations (10) comprises an image portion (IP_{FTHR}) which shows a feathered portion (P) of the bird (B) at the first bird station (10-1),
the computer-executable instructions (60-1), when executed by the at least one processor (40), further cause the at least one processor (40) to:
process the image portion (IP_{FTHR}) to obtain an indication of at least one attribute of the one or more attributes (73 to 76) which relates to the bird (B) at the first bird station (10-1); and
identify a subset of the reference data (70) using the obtained indication, and
the processing of the image data from the first bird station (10-2) to determine whether the bird (B) at the first bird station (10-1) can be identified as being one of the plurality of different birds uses feature descriptors that are limited to the feature descriptors in the identified subset of the reference data (70).

8. The system (1; 2) of Claim 6 or Claim 7, wherein the one or more attributes comprises one or more of a species of the bird (73), a sex of the bird (74), an age of the bird (75), and whether the feature descriptor derived from the at least one image of the foot of the bird relates to a left foot of the bird or a right foot of the bird (76).

9. The system (1; 2) of Claim 8, wherein the computer-executable instructions (60-1; 60-2), when executed by the at least one processor (40), cause the at least one processor (40) to:
process the image portion (IP_{FTHR}) to obtain an indication of an orientation of the bird (B) at the first bird station (10-1; 10-2); and
identify the subset of the reference data (70) in accordance with the obtained indication of the orientation of the bird (B), such that the subset of the reference data (70) comprises feature descriptors that are limited to feature descriptors derived from respective images of either a left foot or a right foot of each bird of the plurality of different birds.

10. The system (1; 2) of any preceding claim, wherein
the reference data (70) further comprises a respective indication of a date (77) on which the respective image of the foot of each bird of the plurality of different birds was captured, and
the computer-executable instructions (60-1; 60-2), when executed by the at least one processor (40), further cause the at least one processor (40) to identify a second subset of the reference data (70) using a date of capture of the image (22) captured by the imaging device (20) of a first bird station (10-1; 10-2) of the plurality of bird stations (10; 10'), wherein the processing of the image data from the first bird station (10-1; 10-2) to determine whether the bird (B) at the first bird station (10-1; 10-2) can be identified as being one of the plurality of different birds uses feature descriptors that are limited to the feature descriptors in the second subset of the reference data (70).

11. The system (1; 2) of any preceding claim, wherein
the reference data (70) further comprises a respective indication of a geographical location (78) at which the respective image of the foot of each bird of the plurality of different birds was captured, and
the computer-executable instructions (60-1; 60-2), when executed by the at least one processor (40), further cause the at least one processor (40) to identify a third subset of the reference data (70) using an indication of a geographical location at which the image (22) captured by the imaging device (20) of a first bird station (10-1; 10-2) of the plurality of bird stations (10; 10') was captured, wherein the processing of the image data from the first bird station (10-1; 10-2) to determine whether the bird (B) at the first bird station (10-1; 10-2) can be identified as being one of the plurality of different birds uses feature descriptors that are limited to the feature descriptors in the third subset of the reference data (70).

12. The system (1; 2) of any preceding claim, wherein each bird station (10-1; 10-2) of the plurality of bird stations (10; 10') further comprises a respective wireless transmitter (24) arranged to wirelessly transmit the image data from the bird station (10-1; 10-2) to the data processing apparatus (30-1; 30-2).

13. The system of any preceding claim, wherein
the data processing system comprises a plurality of processors, and a plurality of memories storing computer-executable instructions that, when executed by the processors, cause the processors to generate the bird tracking data,
the imaging device (20) of each of the bird stations (10; 10') comprises a respective processor of the plurality of processors and a respective memory of the plurality of memories, the respective memory storing computer-executable instructions that, when executed by the respective processor, cause the respective processor to generate, as the respective image data, one or more feature descriptors derived from the respective image (22) captured by the imaging device (20),
the system further comprises a data processing hub arranged to receive the respective one or more feature descriptors from the respective processor of each imaging device (20), the data processing hub comprising a processor (40) of the plurality of processors and a memory (50-1; 50-2) of the plurality of memories which stores the reference data (70) and the computer-executable instructions (60-1; 60-2) that, when executed by the processor (40) of the data processing hub, cause the processor (40) of the data processing hub to process the respective one or more feature descriptors generated by the respective processor of each of the bird stations (10; 10') to generate the bird tracking data.

14. A computer-implemented method of generating bird tracking data for tracking a movement of an individual bird in a region comprising a plurality of bird stations (10; 10'), wherein each bird station (10-1; 10-2) provides at least one of food, drink, bathing, nesting and shelter for birds, and comprises a respective imaging device (20) arranged to generate respective image data by capturing a respective image (22) which shows at least part of a foot (F) of a bird (B) visiting the bird station (10-1; 10-2), the method being performed by a data processing apparatus (30-1; 30-2) comprising at least one processor (40), and at least one memory (50-1; 50-2) storing computer-executable instructions (60-1; 60-2) that, when executed by the at least one processor (40), cause the at least one processor (40) to perform the method, the method comprising:
processing the respective image data from each bird station (10-1; 10-2) of the plurality of bird stations (10; 10') using reference data (70) which comprises, for each bird of a plurality of different birds, a respective set of feature descriptors (DS₁ to DS_{N}) derived from at least one image of a foot of the bird, and respective bird identification information (ID₁ to ID_{N}) which identifies the bird, to determine whether the bird (B) visiting the bird station (10-1; 10-2) can be identified as being one of the plurality of different birds; and
performing, for each bird station (10-1; 10-2) of the plurality of bird stations (10; 10'), processes of:
in case it is determined that the bird (B) visiting the bird station (10-1; 10-2) can be identified as being one of the plurality of different birds, generating a respective item of the tracking data, which item comprises:
respective identification information (ID_{B}) which identifies the one of the plurality of different birds;
respective location information indicative of a geographical location of the bird station (10-1; 10-2); and
a respective indication of a time at which the bird (B) visited the bird station (10-1; 10-2); and
in case it is determined that the bird (B) visiting the bird station (10-1; 10-2) cannot be identified as being one of the plurality of different birds, generating an indicator (I_{B}) indicating that the bird (B) cannot be identified as being one of the plurality of different birds.

15. A computer program comprising computer-executable instructions that, when executed by at least one processor, cause the at least one processor to perform the method of Claim 14.

## Patentansprüche

1. System (1; 2) zur Identifizierung und Verfolgung eines einzelnen Vogels, umfassend:
eine Vielzahl von Vogelstationen (10; 10'), wobei jede Vogelstation (10-1; 10-2) zumindest eines von Essen, Trinken, Baden, Nisten und Unterschlupf für Vögel bereitstellt und eine jeweilige Bildgebungsvorrichtung (20) umfasst, die dazu angeordnet ist, jeweilige Bilddaten durch Erfassen eines jeweiligen Bildes (22) zu erzeugen, das zumindest Teil eines Fußes (F) eines Vogels (B) zeigt, der die Vogelstation (10-1; 10-2) besucht; und
eine Datenverarbeitungsvorrichtung (30-1; 30-2), die zumindest einen Prozessor (40) und zumindest einen Speicher (50-1; 50-2) umfasst, der computerausführbare Anweisungen (60-1; 60-2) speichert, die, wenn durch den zumindest einen Prozessor (40) ausgeführt, den zumindest einen Prozessor (40) veranlassen, Vogelverfolgungsdaten zur Verfolgung einer Bewegung eines einzelnen Vogels zwischen zumindest einigen der Vogelstationen (10; 10') durch Folgendes zu erzeugen:
Verarbeiten der jeweiligen Bilddaten von jeder Vogelstation (10-1; 10-2) aus der Vielzahl von Vogelstationen (10; 10') unter Verwendung von Referenzdaten (70), die für jeden Vogel aus einer Vielzahl von verschiedenen Vögeln einen jeweiligen Satz von Merkmalsdeskriptoren (DS₁ bis DS_{N}), die aus zumindest einem Bild eines Fußes des Vogels abgeleitet sind, und jeweilige Vogelidentifikationsinformationen (ID₁ bis ID_{N}), die den Vogel identifizieren, umfassen, um zu bestimmen, ob der Vogel (B), der die Vogelstation besucht, als einer aus der Vielzahl von verschiedenen Vögeln identifiziert werden kann; und
Durchführen, für jede Vogelstation (10-1; 10-2) aus der Vielzahl von Vogelstationen (10; 10'), von folgenden Prozessen:
falls bestimmt wird, dass der Vogel (B), der die Vogelstation (10-1; 10-2) besucht, als einer aus der Vielzahl von verschiedenen Vögeln identifiziert werden kann, Erzeugen eines jeweiligen Elements der Verfolgungsdaten, wobei das Element Folgendes umfasst:
jeweilige Identifikationsinformationen (ID_{B}), die den einen aus der Vielzahl von verschiedenen Vögeln identifizieren;
jeweilige Standortinformationen, die einen geografischen Standort der Vogelstation (10-1; 10-2) angeben; und
eine jeweilige Angabe einer Zeit, zu welcher der Vogel (B) die Vogelstation (10-1; 10-2) besucht hat; und
falls bestimmt wird, dass der Vogel (B), der die Vogelstation (10-1; 10-2) besucht, nicht als einer aus der Vielzahl von verschiedenen Vögeln identifiziert werden kann, Erzeugen eines Indikators (I_{B}), der angibt, dass der Vogel (B) nicht als einer aus der Vielzahl von verschiedenen Vögeln identifiziert werden kann.

2. System (1; 2) nach Anspruch 1, wobei die computerausführbaren Anweisungen (60-1; 60-2), wenn durch den zumindest einen Prozessor (40) ausgeführt, den zumindest einen Prozessor (40) veranlassen, die jeweiligen Bilddaten von jeder Vogelstation (10-1; 10-2) aus der Vielzahl von Vogelstationen (10; 10') zu verarbeiten, um zu bestimmen, ob der Vogel (B), der die Vogelstation (10-1; 10-2) besucht, durch Folgendes als einer aus der Vielzahl von verschiedenen Vögeln identifiziert werden kann:
Verarbeiten der Bilddaten, um einen Satz von Merkmalsdeskriptoren des jeweiligen Bildes (22) zu erzeugen;
Berechnen eines jeweiligen Grads an Ähnlichkeit zwischen dem erzeugten Satz von Merkmalsdeskriptoren und jedem von einem oder mehreren aus den Sätzen von Merkmalsdeskriptoren (DS₁ bis DS_{N}) in den Referenzdaten (70); und
Bestimmen, basierend auf den berechneten Graden an Ähnlichkeit, ob der Vogel (B), der die Vogelstation (10-1; 10-2) besucht, als einer aus der Vielzahl von verschiedenen Vögeln identifiziert werden kann.

3. System (1; 2) nach Anspruch 2, wobei die computerausführbaren Anweisungen (60-1; 60-2), wenn durch den zumindest einen Prozessor (40) ausgeführt, den zumindest einen Prozessor (40) veranlassen, die jeweiligen Bilddaten von jeder Vogelstation (10-1; 10-2) aus der Vielzahl von Vogelstationen (10; 10') zu verarbeiten, um den jeweiligen Satz von Merkmalsdeskriptoren durch Segmentieren des jeweiligen Bildes (22) zu erzeugen, um einen Teil des Bildes, der ein Bild des zumindest Teils des Fußes (F) des Vogels (B) an der Vogelstation (10-1; 10-2) darstellt, von einem Rest des Bildes (22) zu isolieren, und Verarbeiten des isolierten Teils des Bildes, um den jeweiligen Satz von Merkmalsdeskriptoren des Bildes (22) zu erzeugen.

4. System (1; 2) nach einem der Ansprüche 1 bis 3, wobei die computerausführbaren Anweisungen (60-1), wenn durch den zumindest einen Prozessor (40) ausgeführt, den zumindest einen Prozessor (40) ferner zu Folgendem veranlassen:
falls bestimmt wird, dass der Vogel (B), der zuerst eine Vogelstation (10-1; 10-2) aus der Vielzahl von Vogelstationen (10; 10') besucht, als einer aus der Vielzahl von verschiedenen Vögeln identifiziert werden kann, Aktualisieren des Satzes von Merkmalsdeskriptoren in den Referenzdaten (70) für den einen aus der Vielzahl von verschiedenen Vögeln unter Verwendung von zumindest einem neuen Merkmalsdeskriptor (Dₙₑᵤ), der aus dem Bild (22) abgeleitet ist, das durch die Bildgebungsvorrichtung (20) der ersten Vogelstation (10-1; 10-2) erfasst wird; und
falls bestimmt wird, dass der Vogel (B), der eine erste Vogelstation (10-1; 10-2) aus der Vielzahl von Vogelstationen (10; 10') besucht, nicht als einer aus der Vielzahl von verschiedenen Vögeln identifiziert werden kann, Aktualisieren der Referenzdaten (70), um zumindest einen neuen Merkmalsdeskriptor (D_{N+1}), der aus Bild (22) abgeleitet ist, das durch die Bildgebungsvorrichtung (20) der ersten Vogelstation (10-1; 10-2) erfasst wird, und assoziierte neue Vogelidentifikationsinformationen (ID_{N+1}), die eine neu zugewiesene Identität des Vogels (B), der die erste Vogelstation (10-1; 10-2) besucht, angeben, zu beinhalten.

5. System (2) nach einem der Ansprüche 1 bis 3, wobei
die Bildgebungsvorrichtung (20) einer ersten Vogelstation (10-2) aus der Vielzahl von Vogelstationen (10') dazu angeordnet ist, die Bilddaten durch Erfassen eines ersten Satzes von Bildern (S1) von zumindest Teil des Fußes (F) des Vogels (B), der die erste Vogelstation (10-2) besucht, zu erzeugen, wobei der erste Satz von Bildern (S1) das Bild (22) beinhaltet, das durch die Bildgebungsvorrichtung (20) der ersten Vogelstation (10-2) erfasst wird,
die erste Vogelstation (10-2) ferner eine zweite Bildgebungsvorrichtung (26) umfasst, die dazu angeordnet ist, einen zweiten Satz von Bildern (S2) zu erfassen, wobei jedes Bild des zweiten Satzes von Bildern (S2) einen gefiederten Abschnitt (P) eines Vogels (B) an der ersten Vogelstation (10-2) zeigt, wobei die zweite Bildgebungsvorrichtung (26) dazu angeordnet ist, den zweiten Satz von Bildern (S2) zu erfassen, während die Bildgebungsvorrichtung (20) der ersten Vogelstation (10-2) den ersten Satz von Bildern (S1) erfasst, und
die computerausführbaren Anweisungen (60-2), wenn durch den zumindest einen Prozessor (40) ausgeführt, den zumindest einen Prozessor (40) ferner zu Folgendem veranlassen:
Bestimmen, durch Analysieren des zweiten Satzes von Bildern (S2), ob derselbe Vogel in den Bildern des zweiten Satzes von Bildern (S2) abgebildet wurde;
falls bestimmt wird, dass derselbe Vogel in den Bildern des zweiten Satzes von Bildern (S2) abgebildet wurde und dass der Vogel (B), der die erste Vogelstation (10-2) besucht, als einer aus der Vielzahl von verschiedenen Vögeln identifiziert werden kann, Aktualisieren der Referenzdaten (70) für den einen aus der Vielzahl von verschiedenen Vögeln unter Verwendung von zumindest einem neuen Merkmalsdeskriptor (Dₙₑᵤ), der aus zumindest einem Bild in dem ersten Satz von Bildern (S1) abgeleitet ist;
falls bestimmt wird, dass derselbe Vogel in den Bildern des zweiten Satzes von Bildern (S2) abgebildet wurde und dass der Vogel (B), der die erste Vogelstation (10-2) besucht, nicht als einer aus der Vielzahl von verschiedenen Vögeln identifiziert werden kann, Aktualisieren der Referenzdaten (70), um zumindest einen neuen Merkmalsdeskriptor (D_{N+1}), der aus zumindest einem Bild in dem ersten Satz von Bildern (S1) abgeleitet ist, und neue Vogelidentifikationsinformationen (ID_{N+1}), die eine neu zugewiesene Identität des Vogels (B), der die erste Vogelstation (10-2) besucht, angeben, zu beinhalten; und
falls bestimmt wird, dass derselbe Vogel in den Bildern des zweiten Satzes von Bildern (S2) nicht abgebildet wurde, Erzeugen eines Indikators (I_{NU}), der angibt, dass die Referenzdaten (70) unter Verwendung von zumindest einem Bild in dem ersten Satz von Bildern (S1) nicht zu aktualisieren sind.

6. System (2) nach einem vorhergehenden Anspruch, wobei
die Referenzdaten (70) ferner für jeden Vogel aus der Vielzahl von verschiedenen Vögeln eine jeweilige Angabe von einem oder mehreren Attributen (73 bis 76) in Bezug auf den Vogel (B) umfassen,
eine erste Vogelstation (10-2) aus der Vielzahl von Vogelstationen (10') ferner eine zweite Bildgebungsvorrichtung (26) umfasst, die dazu angeordnet ist, ein zweites Bild (28) des Vogels (B) an der ersten Vogelstation (10-2) zu erfassen, wobei das zweite Bild (28) einen Bildabschnitt (IP_{FTHR}) umfasst, der einen gefiederten Abschnitt (P) des Vogels (B) an der ersten Vogelstation (10-2) zeigt, und
die computerausführbaren Anweisungen (60-2), wenn durch den zumindest einen Prozessor (40) ausgeführt, den zumindest einen Prozessor (40) ferner zu Folgendem veranlassen:
Verarbeiten des Bildabschnittes (IP_{FTHR}), um eine Angabe von zumindest einem Attribut des einen oder der mehreren Attribute (73 bis 76) zu erhalten, das sich auf den Vogel (B) an der ersten Vogelstation (10-2) bezieht; und
Identifizieren eines Teilsatzes der Referenzdaten (70) unter Verwendung der erhaltenen Angabe, und
das Verarbeiten der Bilddaten von der ersten Vogelstation (10-2), um zu bestimmen, ob der Vogel (B) an der ersten Vogelstation (10-2) als einer aus der Vielzahl von verschiedenen Vögeln identifiziert werden kann, Merkmalsdeskriptoren verwendet, die auf die Merkmalsdeskriptoren in dem identifizierten Teilsatz der Referenzdaten (70) beschränkt sind.

7. System (1) nach einem der Ansprüche 1 bis 5, wobei
die Referenzdaten (70) ferner für jeden Vogel aus der Vielzahl von verschiedenen Vögeln eine jeweilige Angabe von einem oder mehreren Attributen (73 bis 76) in Bezug auf den Vogel (B) umfassen, und
das Bild (22), das durch die Bildgebungsvorrichtung (20) erfasst wird, einer ersten Vogelstation (10-1) aus der Vielzahl von Vogelstationen (10) einen Bildabschnitt (IP_{FTHR}) umfasst, der einen gefiederten Abschnitt (P) des Vogels (B) an der ersten Vogelstation (10-1) zeigt,
die computerausführbaren Anweisungen (60-1), wenn durch den zumindest einen Prozessor (40) ausgeführt, den zumindest einen Prozessor (40) ferner zu Folgendem veranlassen:
Verarbeiten des Bildabschnittes (IP_{FTHR}), um eine Angabe von zumindest einem Attribut des einen oder der mehreren Attribute (73 bis 76) zu erhalten, das sich auf den Vogel (B) an der ersten Vogelstation (10-1) bezieht; und
Identifizieren eines Teilsatzes der Referenzdaten (70) unter Verwendung der erhaltenen Angabe, und
das Verarbeiten der Bilddaten von der ersten Vogelstation (10-2), um zu bestimmen, ob der Vogel (B) an der ersten Vogelstation (10-1) als einer aus der Vielzahl von verschiedenen Vögeln identifiziert werden kann, Merkmalsdeskriptoren verwendet, die auf die Merkmalsdeskriptoren in dem identifizierten Teilsatz der Referenzdaten (70) beschränkt sind.

8. System (1; 2) nach Anspruch 6 oder Anspruch 7, wobei das eine oder die mehreren Attribute eines oder mehrere von einer Art des Vogels (73), einem Geschlecht des Vogels (74), einem Alter des Vogels (75) und ob sich der Merkmalsdeskriptor, der von dem zumindest einen Bild des Fußes des Vogels abgeleitet ist, auf einen linken Fuß des Vogels oder einen rechten Fuß des Vogels (76) bezieht, umfassen.

9. System (1; 2) nach Anspruch 8, wobei die computerausführbaren Anweisungen (60-1; 60-2), wenn durch den zumindest einen Prozessor (40) ausgeführt, den zumindest einen Prozessor (40) zu Folgendem veranlassen:
Verarbeiten des Bildabschnittes (IP_{FTHR}), um eine Angabe einer Ausrichtung des Vogels (B) an der ersten Vogelstation (10-1; 10-2) zu erhalten; und
Identifizieren des Teilsatzes der Referenzdaten (70) gemäß der erhaltenen Angabe der Ausrichtung des Vogels (B), sodass der Teilsatz der Referenzdaten (70) Merkmalsdeskriptoren umfasst, die auf Merkmalsdeskriptoren beschränkt sind, die von jeweiligen Bildern entweder eines linken Fußes oder eines rechten Fußes jedes Vogels aus der Vielzahl von verschiedenen Vögeln abgeleitet sind.

10. System (1; 2) nach einem vorhergehenden Anspruch, wobei
die Referenzdaten (70) ferner eine jeweilige Angabe eines Datums (77) umfassen, an dem das jeweilige Bild des Fußes jedes Vogels aus der Vielzahl von verschiedenen Vögeln erfasst wurde, und
die computerausführbaren Anweisungen (60-1; 60-2), wenn durch den zumindest einen Prozessor (40) ausgeführt, den zumindest einen Prozessor (40) ferner veranlassen, einen zweiten Teilsatz der Referenzdaten (70) unter Verwendung eines Erfassungsdatums des Bildes (22), das durch die Bildgebungsvorrichtung (20) erfasst wird, einer ersten Vogelstation (10-1; 10-2) aus der Vielzahl von Vogelstationen (10; 10') zu identifizieren, wobei das Verarbeiten der Bilddaten von der ersten Vogelstation (10-1; 10-2), um zu bestimmen, ob der Vogel (B) an der ersten Vogelstation (10-1; 10-2) als einer aus der Vielzahl von verschiedenen Vögeln identifiziert werden kann, Merkmalsdeskriptoren verwendet, die auf die Merkmalsdeskriptoren in dem zweiten Teilsatz der Referenzdaten (70) beschränkt sind.

11. System (1; 2) nach einem vorhergehenden Anspruch, wobei
die Referenzdaten (70) ferner eine jeweilige Angabe eines geografischen Standortes (78) umfassen, an dem das jeweilige Bild des Fußes jedes Vogels aus der Vielzahl von verschiedenen Vögeln erfasst wurde, und
die computerausführbaren Anweisungen (60-1; 60-2), wenn durch den zumindest einen Prozessor (40) ausgeführt, den zumindest einen Prozessor (40) ferner veranlassen, einen dritten Teilsatz der Referenzdaten (70) unter Verwendung einer Angabe eines geografischen Standortes zu identifizieren, an dem das Bild (22), das durch die Bildgebungsvorrichtung (20) erfasst wird, einer ersten Vogelstation (10-1; 10-2) aus der Vielzahl von Vogelstationen (10; 10') erfasst wurde, wobei die Verarbeitung der Bilddaten von der ersten Vogelstation (10-1; 10-2), um zu bestimmen, ob der Vogel (B) an der ersten Vogelstation (10-1; 10-2) als einer aus der Vielzahl von verschiedenen Vögeln identifiziert werden kann, Merkmalsdeskriptoren verwendet, die auf die Merkmalsdeskriptoren in dem dritten Teilsatz der Referenzdaten (70) beschränkt sind.

12. System (1; 2) nach einem vorhergehenden Anspruch, wobei jede Vogelstation (10-1; 10-2) aus der Vielzahl von Vogelstationen (10; 10') ferner einen jeweiligen drahtlosen Sender (24) umfasst, der dazu angeordnet ist, die Bilddaten von der Vogelstation (10-1; 10-2) drahtlos an die Datenverarbeitungsvorrichtung (30-1; 30-2) zu übertragen.

13. System nach einem vorhergehenden Anspruch, wobei
das Datenverarbeitungssystem eine Vielzahl von Prozessoren und eine Vielzahl von Speichern umfasst, die computerausführbare Anweisungen speichern, die, wenn durch die Prozessoren ausgeführt, die Prozessoren veranlassen, die Vogelverfolgungsdaten zu erzeugen,
die Bildgebungsvorrichtung (20) von jeder der Vogelstationen (10; 10') einen jeweiligen Prozessor aus der Vielzahl von Prozessoren und einen jeweiligen Speicher aus der Vielzahl von Speichern umfasst, wobei der jeweilige Speicher computerausführbare Anweisungen speichert, die, wenn durch den jeweiligen Prozessor ausgeführt, den jeweiligen Prozessor veranlassen, als die jeweiligen Bilddaten einen oder mehrere Merkmalsdeskriptoren zu erzeugen, die von dem jeweiligen Bild (22), das durch die Bildgebungsvorrichtung (20) erfasst wird, abgeleitet sind,
das System ferner einen Datenverarbeitungs-Hub umfasst, der dazu angeordnet ist, den jeweiligen einen oder die jeweiligen mehreren Merkmalsdeskriptoren von dem jeweiligen Prozessor jeder Bildgebungsvorrichtung (20) zu empfangen, wobei der Datenverarbeitungs-Hub einen Prozessor (40) aus der Vielzahl von Prozessoren und einen Speicher (50-1; 50-2) aus der Vielzahl von Speichern umfasst, der die Referenzdaten (70) und die computerausführbaren Anweisungen (60-1; 60-2) speichert, die, wenn durch den Prozessor (40) des Datenverarbeitungs-Hubs ausgeführt, den Prozessor (40) des Datenverarbeitungs-Hubs veranlassen, den jeweiligen einen oder die jeweiligen mehreren Merkmalsdeskriptoren, die durch den jeweiligen Prozessor von jeder der Vogelstationen (10; 10') erzeugt werden, zu verarbeiten, um die Vogelverfolgungsdaten zu erzeugen.

14. Computerimplementiertes Verfahren zur Erzeugung von Vogelverfolgungsdaten zur Verfolgung einer Bewegung eines einzelnen Vogels in einem Gebiet, das eine Vielzahl von Vogelstationen (10; 10') umfasst, wobei jede Vogelstation (10-1; 10-2) zumindest eines von Essen, Trinken, Baden, Nisten und Unterschlupf für Vögel bereitstellt und eine jeweilige Bildgebungsvorrichtung (20) umfasst, die dazu angeordnet ist, jeweilige Bilddaten durch Erfassen eines jeweiligen Bildes (22) zu erzeugen, das zumindest Teil eines Fußes (F) eines Vogels (B) zeigt, der die Vogelstation (10-1; 10-2) besucht, wobei das Verfahren durch eine Datenverarbeitungsvorrichtung (30-1; 30-2) durchgeführt wird, die zumindest einen Prozessor (40) und zumindest einen Speicher (50-1; 50-2) umfasst, der computerausführbare Anweisungen (60-1; 60-2) speichert, die, wenn durch den zumindest einen Prozessor (40) ausgeführt, den zumindest einen Prozessor (40) veranlassen, das Verfahren durchzuführen, wobei das Verfahren Folgendes umfasst:
Verarbeiten der jeweiligen Bilddaten von jeder Vogelstation (10-1; 10-2) aus der Vielzahl von Vogelstationen (10; 10') unter Verwendung von Referenzdaten (70), die für jeden Vogel aus einer Vielzahl von verschiedenen Vögeln einen jeweiligen Satz von Merkmalsdeskriptoren (DS₁ bis DS_{N}), die aus zumindest einem Bild eines Fußes des Vogels abgeleitet sind, und jeweilige Vogelidentifikationsinformationen (ID₁ bis ID_{N}), die den Vogel identifizieren, umfassen, um zu bestimmen, ob der Vogel (B), der die Vogelstation (10-1; 10-2) besucht, als einer aus der Vielzahl von verschiedenen Vögeln identifiziert werden kann; und
Durchführen, für jede Vogelstation (10-1; 10-2) aus der Vielzahl von Vogelstationen (10; 10'), von folgenden Prozessen:
falls bestimmt wird, dass der Vogel (B), der die Vogelstation (10-1; 10-2) besucht, als einer aus der Vielzahl von verschiedenen Vögeln identifiziert werden kann, Erzeugen eines jeweiligen Elements der Verfolgungsdaten, wobei das Element Folgendes umfasst:
jeweilige Identifikationsinformationen (ID_{B}), die den einen aus der Vielzahl von verschiedenen Vögeln identifizieren;
jeweilige Standortinformationen, die einen geografischen Standort der Vogelstation (10-1; 10-2) angeben; und
eine jeweilige Angabe einer Zeit, zu welcher der Vogel (B) die Vogelstation (10-1; 10-2) besucht hat; und
falls bestimmt wird, dass der Vogel (B), der die Vogelstation (10-1; 10-2) besucht, nicht als einer aus der Vielzahl von verschiedenen Vögeln identifiziert werden kann, Erzeugen eines Indikators (I_{B}), der angibt, dass der Vogel (B) nicht als einer aus der Vielzahl von verschiedenen Vögeln identifiziert werden kann.

15. Computerprogramm, das computerausführbare Anweisungen umfasst, die, wenn durch zumindest einen Prozessor ausgeführt, den zumindest einen Prozessor veranlassen, das Verfahren nach Anspruch 14 durchzuführen.

## Revendications

1. Système (1 ; 2) destiné à identifier et suivre un oiseau individuel, comprenant :
une pluralité de stations pour oiseaux (10 ; 10'), chaque station pour oiseaux (10-1 ; 10-2) fournissant au moins l'un de la nourriture, de la boisson, de la baignade, de la nidification et de l'abri pour oiseaux, et comprenant un dispositif d'imagerie respectif (20) agencé pour générer des données d'image respectives en capturant une image respective (22) qui montre au moins une partie d'un pied (F) d'un oiseau (B) visitant la station pour oiseaux (10-1 ; 10-2) ; et
un appareil de traitement de données (30-1 ; 30-2) comprenant au moins un processeur (40), et au moins une mémoire (50-1 ; 50-2) stockant des instructions exécutables par ordinateur (60-1 ; 60-2) qui, lorsqu'elles sont exécutées par l'au moins un processeur (40), amènent l'au moins un processeur (40) à générer des données de suivi d'oiseau en vue du suivi d'un mouvement d'un oiseau individuel entre au moins certaines des stations pour oiseaux (10 ; 10') par :
le traitement des données d'image respectives provenant de chaque station pour oiseaux (10-1 ; 10-2) de la pluralité de stations pour oiseaux (10 ; 10') à l'aide de données de référence (70) qui comprennent, pour chaque oiseau d'une pluralité d'oiseaux différents, un ensemble respectif de descripteurs de caractéristiques (DS₁ à DS_{N}) dérivés d'au moins une image d'un pied de l'oiseau, et des informations d'identification d'oiseau respectives (ID₁ à ID_{N}) qui identifient l'oiseau, afin de déterminer si l'oiseau (B) visitant la station pour oiseaux peut être identifié comme étant l'un de la pluralité d'oiseaux différents ; et
la réalisation, pour chaque station pour oiseaux (10-1 ; 10-2) de la pluralité de stations pour oiseaux (10 ; 10'), de processus de :
dans le cas où la possibilité d'identifier l'oiseau (B) visitant la station pour oiseaux (10-1 ; 10-2) comme étant l'un de la pluralité d'oiseaux différents est déterminée, génération d'un élément respectif des données de suivi, lequel élément comprend :
des informations d'identification respectives (ID_{B}) qui identifient l'oiseau de la pluralité d'oiseaux différents ;
des informations d'emplacement respectives indiquant un emplacement géographique de la station pour oiseaux (10-1 ; 10-2) ; et
une indication respective d'un temps auquel l'oiseau (B) a visité la station pour oiseaux (10-1 ; 10-2) ; et
dans le cas où l'impossibilité d'identifier l'oiseau (B) visitant la station pour oiseaux (10-1 ; 10-2) comme étant l'un de la pluralité d'oiseaux différents est déterminée, génération d'un indicateur (I_{B}) indiquant que l'oiseau (B) ne peut pas être identifié comme étant l'un de la pluralité d'oiseaux différents.

2. Système (1 ; 2) de la revendication 1, lesdites instructions exécutables par ordinateur (60-1 ; 60-2), lorsqu'elles sont exécutées par l'au moins un processeur (40), amenant l'au moins un processeur (40) à traiter les données d'image respectives de chaque station pour oiseaux (10-1 ; 10-2) de la pluralité de stations pour oiseaux (10 ; 10') afin de déterminer si l'oiseau (B) visitant la station pour oiseaux (10-1 ; 10-2) peut être identifié comme étant l'un de la pluralité d'oiseaux différents par :
le traitement des données d'image pour générer un ensemble de descripteurs de caractéristiques de l'image respective (22) ;
le calcul d'un degré respectif de similitude entre l'ensemble généré de descripteurs de caractéristiques et chacun d'un ou de plusieurs des ensembles de descripteurs de caractéristiques (DS₁ à DS_{N}) dans les données de référence (70) ; et
la détermination, sur la base des degrés calculés de similitude, pour savoir si l'oiseau (B) visitant la station pour oiseaux (10-1 ; 10-2) peut être identifié comme étant l'un de la pluralité d'oiseaux différents.

3. Système (1 ; 2) de la revendication 2, lesdites instructions exécutables par ordinateur (60-1 ; 60-2), lorsqu'elles sont exécutées par l'au moins un processeur (40), amenant l'au moins un processeur (40) à traiter les données d'image respectives provenant de chaque station pour oiseaux (10-1 ; 10-2) de la pluralité de stations pour oiseaux (10 ; 10') afin de générer l'ensemble respectif de descripteurs de caractéristiques en segmentant l'image respective (22) afin d'isoler une partie de l'image représentant une image de l'au moins une partie du pied (F) de l'oiseau (B) au niveau de la station pour oiseaux (10-1 ; 10-2) d'un reste de l'image (22), et en traitant la partie isolée de l'image afin de générer l'ensemble respectif de descripteurs de caractéristiques de l'image (22).

4. Système (1 ; 2) de l'une quelconque des revendications 1 à 3, lesdites instructions exécutables par ordinateur (60-1), lorsqu'elles sont exécutées par l'au moins un processeur (40), amenant en outre ledit au moins un processeur (40) à :
dans le cas où la possibilité d'identifier l'oiseau (B) visitant d'abord une station pour oiseaux (10-1 ; 10-2) de la pluralité de stations pour oiseaux (10 ; 10') comme étant l'un de la pluralité d'oiseaux différents est déterminée, mettre à jour l'ensemble de descripteurs de caractéristiques dans les données de référence (70) pour l'oiseau de la pluralité d'oiseaux différents à l'aide d'au moins un nouveau descripteur de caractéristiques (Dₙₒᵤᵥₑₐᵤ) qui est dérivé de l'image (22) capturée par le dispositif d'imagerie (20) de la première station pour oiseaux (10-1 ; 10-2) ; et
dans le cas où l'impossibilité d'identifier l'oiseau (B) visitant une première station pour oiseaux (10-1 ; 10-2) de la pluralité de stations pour oiseaux (10 ; 10') comme étant l'un de la pluralité d'oiseaux différents est déterminée, mettre à jour les données de référence (70) pour inclure au moins un nouveau descripteur de caractéristique (D_{N+1}) qui est dérivé d'image (22) capturée par le dispositif d'imagerie (20) de la première station pour oiseaux (10-1 ; 10-2), et de nouvelles informations d'identification d'oiseau associées (ID_{N+1}) qui indiquent une nouvelle identité attribuée à l'oiseau (B) visitant la première station pour oiseaux (10-1 ; 10-2).

5. Système (2) de l'une quelconque des revendications 1 à 3,
ledit dispositif d'imagerie (20) d'une première station pour oiseaux (10-2) de la pluralité de stations pour oiseaux (10') étant agencé pour générer les données d'image en capturant un premier ensemble d'images (S1) d'au moins une partie du pied (F) de l'oiseau (B) visitant la première station pour oiseaux (10-2), lequel premier ensemble d'images (S1) comprenant l'image (22) capturée par le dispositif d'imagerie (20) de la première station pour oiseaux (10-2),
ladite première station pour oiseaux (10-2) comprenant en outre un second dispositif d'imagerie (26) agencé pour capturer un second ensemble d'images (S2), chaque image du second ensemble d'images (S2) montrant une partie à plumes (P) d'un oiseau (B) à la première station pour oiseaux (10-2), le second dispositif d'imagerie (26) étant agencé pour capturer le second ensemble d'images (S2) pendant que le dispositif d'imagerie (20) de la première station pour oiseaux (10-2) capture le premier ensemble d'images (S1), et
lesdites instructions exécutables par ordinateur (60-2), lorsqu'elles sont exécutées par l'au moins un processeur (40), amenant en outre l'au moins un processeur (40) à :
déterminer, en analysant le second ensemble d'images (S2), si le même oiseau a été pris en image dans les images du second ensemble d'images (S2) ;
dans le cas où la prise en image du même oiseau dans les images du second ensemble d'images (S2) et la possibilité d'identifier l'oiseau (B) visitant la première station pour oiseaux (10-2) comme étant l'un de la pluralité d'oiseaux différents sont déterminées, mettre à jour les données de référence (70) pour l'oiseau de la pluralité d'oiseaux différents à l'aide d'au moins un nouveau descripteur de caractéristique (Dₙₒᵤᵥₑₐᵤ) qui est dérivé d'au moins une image dans le premier ensemble d'images (S1) ;
dans le cas où la prise en image du même oiseau dans les image du second ensemble d'images (S2) et l'impossibilité d'identifier l'oiseau (B) visitant la première station pour oiseaux (10-2) comme étant l'une de la pluralité d'oiseaux différents sont déterminées, mettre à jour les données de référence (70) pour inclure au moins un nouveau descripteur de caractéristique (D_{N+1}) qui est dérivé d'au moins une image dans le premier ensemble d'images (S1), et de nouvelles informations d'identification d'oiseau (ID_{N+1}) qui indiquent une nouvelle identité attribuée de l'oiseau (B) visitant la première station pour oiseaux (10-2) ; et
dans le cas où la non prise en image du même oiseau dans les images du second ensemble d'images (S2) est déterminée, générer un indicateur (I_{NU}) qui indique que les données de référence (70) ne doivent pas être mises à jour à l'aide d'au moins une image dans le premier ensemble d'images (S1).

6. Système (2) d'une quelconque revendication précédente,
lesdites données de référence (70) comprenant en outre, pour chaque oiseau de la pluralité d'oiseaux différents, une indication respective d'un ou de plusieurs attributs (73 à 76) relatifs à l'oiseau (B),
une première station pour oiseaux (10-2) de la pluralité de stations pour oiseaux (10') comprenant en outre un second dispositif d'imagerie (26) agencé pour capturer une seconde image (28) de l'oiseau (B) à la première station pour oiseaux (10-2), ladite seconde image (28) comprenant une partie d'image (IP_{FTHR}) qui montre une partie à plumes (P) de l'oiseau (B) à la première station pour oiseaux (10-2), et
lesdites instructions exécutables par ordinateur (60-2), lorsqu'elles sont exécutées par l'au moins un processeur (40), amenant en outre l'au moins un processeur (40) à :
traiter la partie d'image (IP_{FTHR}) pour obtenir une indication d'au moins un attribut du ou des attributs (73 à 76) qui se rapporte à l'oiseau (B) à la première station pour oiseaux (10-2) ; et
identifier un sous-ensemble des données de référence (70) à l'aide de l'indication obtenue, et
le traitement des données d'image provenant de la première station pour oiseaux (10-2) pour déterminer si l'oiseau (B) à la première station pour oiseaux (10-2) peut être identifié comme étant l'un de la pluralité d'oiseaux différents utilisant des descripteurs de caractéristiques qui sont limités aux descripteurs de caractéristiques dans le sous-ensemble identifié des données de référence (70).

7. Système (1) de l'une quelconque des revendications 1 à 5,
lesdites données de référence (70) comprenant en outre, pour chaque oiseau de la pluralité d'oiseaux différents, une indication respective d'un ou de plusieurs attributs (73 à 76) relatifs à l'oiseau (B), et
ladite image (22) capturée par le dispositif d'imagerie (20) d'une première station pour oiseaux (10-1) de la pluralité de stations pour oiseaux (10) comprenant une partie d'image (IP_{FTHR}) qui montre une partie à plumes (P) de l'oiseau (B) à la première station pour oiseaux (10-1),
lesdites instructions exécutables par ordinateur (60-1), lorsqu'elles sont exécutées par l'au moins un processeur (40), amenant en outre l'au moins un processeur (40) à :
traiter la partie d'image (IP_{FTHR}) pour obtenir une indication d'au moins un attribut du ou des attributs (73 à 76) qui se rapporte à l'oiseau (B) à la première station pour oiseaux (10-1) ; et
identifier un sous-ensemble des données de référence (70) à l'aide de l'indication obtenue, et
le traitement des données d'image provenant de la première station pour oiseaux (10-2) pour déterminer si l'oiseau (B) à la première station pour oiseaux (10-1) peut être identifié comme étant l'un de la pluralité d'oiseaux différents utilisant des descripteurs de caractéristiques qui sont limités aux descripteurs de caractéristiques dans le sous-ensemble identifié des données de référence (70).

8. Système (1 ; 2) de la revendication 6 ou de la revendication 7, ledit ou lesdits attributs comprenant un ou plusieurs parmi une espèce de l'oiseau (73), un sexe de l'oiseau (74), un âge de l'oiseau (75), et si le descripteur de caractéristique dérivé de l'au moins une image du pied de l'oiseau se rapporte à un pied gauche de l'oiseau ou à un pied droit de l'oiseau (76).

9. Système (1 ; 2) de la revendication 8, lesdites instructions exécutables par ordinateur (60-1 ; 60-2), lorsqu'elles sont exécutées par l'au moins un processeur (40), amenant l'au moins un processeur (40) à :
traiter la partie d'image (IP_{FTHR}) pour obtenir une indication d'une orientation de l'oiseau (B) à la première station pour oiseaux (10-1 ; 10-2) ; et
identifier le sous-ensemble des données de référence (70) conformément à l'indication obtenue de l'orientation de l'oiseau (B), de sorte que le sous-ensemble des données de référence (70) comprenne des descripteurs de caractéristiques qui sont limités à des descripteurs de caractéristiques dérivés d'images respectives d'un pied gauche ou d'un pied droit de chaque oiseau de la pluralité d'oiseaux différents.

10. Système (1 ; 2) d'une quelconque revendication précédente,
lesdites données de référence (70) comprenant en outre une indication respective d'une date (77) à laquelle l'image respective du pied de chaque oiseau de la pluralité d'oiseaux différents a été capturée, et
lesdites instructions exécutables par ordinateur (60-1 ; 60-2), lorsqu'elles sont exécutées par l'au moins un processeur (40), amenant en outre l'au moins un processeur (40) à identifier un deuxième sous-ensemble des données de référence (70) à l'aide d'une date de capture de l'image (22) capturée par le dispositif d'imagerie (20) d'une première station pour oiseaux (10-1 ; 10-2) de la pluralité de stations pour oiseaux (10 ; 10'), ledit traitement des données d'image provenant de la première station pour oiseaux (10-1 ; 10-2) pour déterminer si l'oiseau (B) à la première station pour oiseaux (10-1 ; 10-2) peut être identifié comme étant l'un de la pluralité d'oiseaux différents utilisant des descripteurs de caractéristiques qui sont limités aux descripteurs de caractéristiques dans le deuxième sous-ensemble des données de référence (70).

11. Système (1 ; 2) d'une quelconque revendication précédente,
lesdites données de référence (70) comprenant en outre une indication respective d'un emplacement géographique (78) au niveau duquel l'image respective du pied de chaque oiseau de la pluralité d'oiseaux différents a été capturée, et
lesdites instructions exécutables par ordinateur (60-1 ; 60-2), lorsqu'elles sont exécutées par l'au moins un processeur (40), amenant en outre l'au moins un processeur (40) à identifier un troisième sous-ensemble des données de référence (70) à l'aide d'une indication d'un emplacement géographique au niveau duquel l'image (22) capturée par le dispositif d'imagerie (20) d'une première station pour oiseaux (10-1 ; 10-2) de la pluralité de stations pour oiseaux (10 ; 10') a été capturée, ledit traitement des données d'image de la première station pour oiseaux (10-1 ; 10-2) pour déterminer si l'oiseau (B) à la première station pour oiseaux (10-1 ; 10-2) peut être identifié comme étant l'un de la pluralité d'oiseaux différents utilisant des descripteurs de caractéristiques qui sont limités aux descripteurs de caractéristiques dans le troisième sous-ensemble des données de référence (70).

12. Système (1 ; 2) d'une quelconque revendication précédente, chaque station pour oiseaux (10-1 ; 10-2) de la pluralité de stations pour oiseaux (10 ; 10') comprenant en outre un émetteur sans fil respectif (24) agencé pour transmettre sans fil les données d'image de la station pour oiseaux (10-1 ; 10-2) à l'appareil de traitement de données (30-1 ; 30-2).

13. Système d'une quelconque revendication précédente,
ledit système de traitement de données comprenant une pluralité de processeurs, et une pluralité de mémoires stockant des instructions exécutables par ordinateur qui, lorsqu'elles sont exécutées par les processeurs, amènent les processeurs à générer les données de suivi d'oiseaux,
ledit dispositif d'imagerie (20) de chacune des stations pour oiseaux (10 ; 10') comprenant un processeur respectif de la pluralité de processeurs et une mémoire respective de la pluralité de mémoires, la mémoire respective stockant des instructions exécutables par ordinateur qui, lorsqu'elles sont exécutées par le processeur respectif, amènent le processeur respectif à générer, en tant que données d'image respectives, un ou plusieurs descripteurs de caractéristiques dérivés de l'image respective (22) capturée par le dispositif d'imagerie (20),
ledit système comprenant en outre un concentrateur de traitement de données agencé pour recevoir le ou les descripteurs de caractéristiques respectifs en provenance du processeur respectif de chaque dispositif d'imagerie (20), le concentrateur de traitement de données comprenant un processeur (40) de la pluralité de processeurs et une mémoire (50-1 ; 50-2) de la pluralité de mémoires qui stocke les données de référence (70) et les instructions exécutables par ordinateur (60-1 ; 60-2) qui, lorsqu'elles sont exécutées par le processeur (40) du concentrateur de traitement de données, amènent le processeur (40) du concentrateur de traitement de données à traiter le ou les descripteurs de caractéristiques respectifs générés par le processeur respectif de chacune des stations pour oiseaux (10 ; 10') afin de générer les données de suivi d'oiseaux.

14. Procédé mis en œuvre par ordinateur de génération de données de suivi d'oiseau en vue du suivi d'un mouvement d'un oiseau individuel dans une zone comprenant une pluralité de stations pour oiseaux (10 ; 10'), chaque station pour oiseaux (10-1 ; 10-2) fournissant au moins l'un de la nourriture, de la boisson, de la baignade, de la nidification et de l'abri pour oiseaux, et comprenant un dispositif d'imagerie respectif (20) agencé pour générer des données d'image respectives en capturant une image respective (22) qui montre au moins une partie d'un pied (F) d'un oiseau (B) visitant la station pour oiseaux (10-1 ; 10-2), le procédé étant mis en œuvre par un appareil de traitement de données (30-1 ; 30-2) comprenant au moins un processeur (40), et au moins une mémoire (50-1 ; 50-2) stockant des instructions exécutables par ordinateur (60-1 ; 60-2) qui, lorsqu'elles sont exécutées par l'au moins un processeur (40), amènent l'au moins un processeur (40) à mettre en œuvre le procédé, le procédé comprenant :
le traitement des données d'image respectives provenant de chaque station pour oiseaux (10-1 ; 10-2) de la pluralité de stations pour oiseaux (10 ; 10') à l'aide de données de référence (70) qui comprennent, pour chaque oiseau d'une pluralité d'oiseaux différents, un ensemble respectif de descripteurs de caractéristiques (DS₁ à DS_{N}) dérivés d'au moins une image d'un pied de l'oiseau, et des informations d'identification d'oiseau respectives (ID₁ à ID_{N}) qui identifient l'oiseau, afin de déterminer si l'oiseau (B) visitant la station pour oiseaux (10-1 ; 10-2) peut être identifié comme étant l'un de la pluralité d'oiseaux différents ; et
la réalisation, pour chaque station pour oiseaux (10-1 ; 10-2) de la pluralité de stations pour oiseaux (10 ; 10'), de processus de :
dans le cas où la possibilité d'identifier l'oiseau (B) visitant la station pour oiseaux (10-1 ; 10-2) comme étant l'un de la pluralité d'oiseaux différents est déterminée, génération d'un élément respectif des données de suivi, lequel élément comprend :
des informations d'identification respectives (ID_{B}) qui identifient l'oiseau de la pluralité d'oiseaux différents ;
des informations d'emplacement respectives indiquant un emplacement géographique de la station pour oiseaux (10-1 ; 10-2) ; et
une indication respective d'un temps auquel l'oiseau (B) a visité la station pour oiseaux (10-1 ; 10-2) ; et
dans le cas où l'impossibilité d'identifier l'oiseau (B) visitant la station pour oiseaux (10-1 ; 10-2) comme étant l'un de la pluralité d'oiseaux différents est déterminée, génération d'un indicateur (I_{B}) indiquant que l'oiseau (B) ne peut pas être identifié comme étant l'un de la pluralité d'oiseaux différents.

15. Programme informatique comprenant des instructions exécutables par ordinateur qui, lorsqu'elles sont exécutées par au moins un processeur, amènent l'au moins un processeur à réaliser le procédé de la revendication 14.
